# EUROPÄISCHE PATENTSCHRIFT

(11) **EP 3 701 107 B1**
(45) Veröffentlichungstag und Bekanntmachung des Hinweises auf die Patenterteilung: **25.09.2024**
(21) Anmeldenummer: 18800496.4
(22) Anmeldetag: 23.10.2018
(51) Int. Cl.: E04H 12/16, E04H 12/08, E04H 12/12

(54) **RINGFÖRMIGE KONSOLE ZUM EXTERNEN SPANNEN EINES TURMSEGMENTS, EXTERNES SPANNSYSTEM EINES HYBRIDTURMS, TURMABSCHNITT EINES HYBRIDTURMS, HYBRIDTURM, WINDENERGIEANLAGE UND MONTAGEVERFAHREN EINES EXTERNEN SPANNSYSTEMS FÜR EINEN HYBRIDTURM**
ANNULAR BRACKET FOR EXTERNALLY LOADING A TOWER SEGMENT, EXTERNAL LOADING SYSTEM OF A HYBRID TOWER, TOWER SECTION OF A HYBRID TOWER, HYBRID TOWER, WIND TURBINE, AND ASSEMBLY METHOD OF AN EXTERNAL LOADING SYSTEM FOR A HYBRID TOWER
CONSOLE ANNULAIRE DESTINÉE À LA CONTRAINTE EXTERNE D'UN SEGMENT DE TOUR, SYSTÈME DE CONTRAINTE EXTERNE D'UNE TOUR HYBRIDE, SECTION DE TOUR D'UNE TOUR HYBRIDE, TOUR HYBRIDE, ÉOLIENNE ET PROCÉDÉ DE MONTAGE D'UN SYSTÈME DE CONTRAINTE EXTERNE POUR UNE TOUR HYBRIDE

(30) Priorität: 26.10.2017 DE 102017125060
(43) Veröffentlichungstag der Anmeldung: 02.09.2020
(73) Patentinhaber: Wobben Properties GmbH, 26607 Aurich (DE)
(72) Erfinder: KERSTEN, Roy, 39291 Hohenwarthe (DE); RÖTHEL, Steffen, 18055 Rostock (DE)
(74) Vertreter: Eisenführ Speiser
(86) Internationale Anmeldenummer: PCT/EP2018/079006
(87) Internationale Veröffentlichungsnummer: WO 2019/081491

(56) Entgegenhaltungen:
- WO-A1-2014/037421
- CN-A- 106 121 346

## Beschreibung

Die Erfindung betrifft eine ringförmige Konsole zum externen Spannen eines Turmsegments, insbesondere eines Turmsegments einer Windenergieanlage, ein externes Spannsystem eines Hybridturms, vorzugsweise eines Hybridturms einer Windenergieanlage, einen Turmabschnitt eines Hybridturms, vorzugsweise eines Hybridturms einer Windenergieanlage, einen Hybridturm, vorzugsweise einen Hybridturm einer Windenergieanlage, eine Windenergieanlage, und ein Montageverfahren eines externen Spannsystems für einen Hybridturm, vorzugsweise für einen Hybridturm einer Windenergieanlage.

Hybridtürme sind bekannt und umfassen in der Regel mindestens ein Turmsegment aus Stahlbeton oder Spannbeton und mindestens ein Turmsegment aus Stahl. In der Regel umfassen Hybridtürme ausgehend von einem Fundament einen unteren Turmabschnitt mit einem oder mehreren Turmsegmenten aus Stahlbeton oder Spannbeton und einen darauf angeordneten oberen Turmabschnitt mit einem oder mehreren Turmsegmenten aus Stahl. Ein Turmabschnitt kann ein Turmsegment oder mehrere Turmsegmente umfassen. Ein Turmsegment kann wieder einen oder mehrere Teilsegmente umfassen.

Hybridtürme werden bevorzugt bei hohen Türmen eingesetzt. Hybridtürme werden beispielsweise für Sendetürme, Fernsehtürme oder Windenergieanlagen eingesetzt. Hybridtürme sind auf Grund der großen zu erreichenden Höhen insbesondere für den Einsatz von Windenergieanlagen interessant, da in den größeren Höhen der mögliche Windertrag steigt. Bei Windenergieanlagen kann auf einem oberen Turmabschnitt eine Gondel angeordnet sein oder der obere Turmabschnitt kann eine Gondel umfassen. Hybridtürme sind abhängig von Wind- und/oder Witterungsverhältnissen wechselnden Betriebskräften ausgesetzt. Um die eingebrachten Betriebskräfte über den Hybridturm in das Fundament zu leiten, ist in der Regel der obere Turmabschnitt aus Stahl mit dem unteren Turmabschnitt aus Stahlbeton oder Spannbeton verbunden. Die Verbindung nimmt in der Regel unter anderem aus den Betriebskräften resultierende Zug- und/oder Druck- und/oder Biegebelastungen auf.

Die DE 102 30 273 B3 offenbart einen Turm einer Windkraftanlage mit einem Verbindungsstück zwischen einem unteren rohrförmigen Spannbetonteil und einem oberen rohrförmigen Stahlteil. Die EP 2 807 317 B1 offenbart einen Hybridturm mit einem aus Beton bestehenden rohrförmigen unteren Turmabschnitt und einem aus Stahl bestehenden rohrförmigen oberen Turmabschnitt sowie mit einem zwischen den beiden Turmabschnitten angeordneten Adapter zum Verbinden der beiden Turmabschnitte. Die DE 100 33 845 A1 beschreibt ein Verfahren zum Errichten eines Turmes aus Spannbeton-Fertigteilen und eine Vorrichtung zur Ausführung des Verfahrens. Die DE 10 2013 226 536 A1 und WO 2015/090861 A1 offenbaren eine Anordnung mit einem Betonfundament und einem Turm zum Tragen einer Gondel eine Windenergieanlage, wobei der Turm eine Anzahl von Turmsegmenten umfasst, die entlang einer Turmachse angeordnet sind und zumindest ist ein oberstes Turmsegment einen Kopfflansch und einen Fußflansch umfasst, wobei ein oberstes Turmsegment der Anzahl von Turmsegmenten als ein Stahlelement gebildet ist; und eine Anzahl von Spann- oder Zuglitzen das Betonfundament mit dem Kopfflansch des obersten Turmsegmentes unter Zugspannung verspannt. Ein Weiteres, aus dem Stand der Technik bekannte Dokument, welches eine ringförmige Konsole zum externen Spannen eines Turmsegments offenbart ist WO2014/037421 A1.

Bekannte Konstruktionen von Hybridtürmen sind oft mit hohen Kosten, beispielsweise in der Formherstellung, und einer hohen technologischen Komplexität, beispielsweise beim Vorspannen und Verpressen von Spannlitzen in Spannbeton-Fertigteilen, verbunden. Darüber hinaus lässt sich die Vorspannung von vorgespannten Turmsegmenten und/oder Turmabschnitten und/oder Hybridtürmen häufig nicht oder nur mit einem relativ hohen Personal- und Zeiteinsatz sowie mittels kostenintensiver technischer Mittel vor Ort anpassen und/oder korrigieren.

Das Deutsche Patent- und Markenamt hat in der Prioritätsanmeldung zur vorliegenden Anmeldung folgenden Stand der Technik recherchiert: DE 10 2012 001 109 A1, CN 106121346 A, CN 104121155 A, DE 10 2016 203 494 A1, US 2011/0138707 A1, US 2011/0113708 A1, US 9 032 674 B2, EP 2 339 094 B1, DE 10 2013 226 536 A1, WO 2014/202733 A1.

Der Erfindung liegt daher die Aufgabe zu Grunde, eine verbesserte Lösung bereitzustellen.

Insbesondere ist eine Aufgabe der vorliegenden Erfindung, eine ringförmige Konsole zum externen Spannen eines Turmsegments, ein verbessertes externes Spannsystem eines Hybridturms, einen verbesserten Turmabschnitt eines Hybridturms, einen verbesserten Hybridturm, eine verbesserte Windenergieanlage, und ein verbessertes Montageverfahren eines externen Spannsystems für einen Hybridturm bereitzustellen. Ferner ist es insbesondere eine Aufgabe der vorliegenden Erfindung, eine ringförmige Konsole zum externen Spannen eines Turmsegments, ein externes Spannsystem eines Hybridturms, einen Turmabschnitt eines Hybridturms, einen Hybridturm, eine Windenergieanlage, und ein Montageverfahren eines externen Spannsystems für einen Hybridturm bereitzustellen, welche ein externes Verspannen und/oder ein Verbinden von mindestens einem Turmsegment und/oder von mindestens einem Turmabschnitt und/oder von einem Turm, insbesondere einem Hybridturm, mit einem Turmsegment und/oder einem Turmabschnitt und/oder einem Fundament ermöglichen/ermöglicht.

Diese Aufgabe wird gemäß Anspruch 1, in einem ersten Aspekt der Erfindung gelöst durch eine ringförmige Konsole zum externen Spannen eines Turmsegments, insbesondere eines Turmsegments einer Windenergieanlage, mit einem Anschlusselement zum Anschließen eines Spannelements, einem Lagerelement zur Übertragung einer Spannkraft auf das Turmsegment, und einem ringförmigen Kraftübertragungselement zur Übertragung der Spannkraft zwischen dem Anschlusselement und dem Lagerelement, wobei das Lagerelement in radialer Richtung einen größeren Abstand zu einer Längsachse der ringförmigen Konsole aufweist als das Anschlusselement, wobei in radialer Richtung der Abstand des Lagerelements zur Längsachse kleiner ist zu einem Außenradius des Turmsegments und größer ist als ein Innenradius des Turmsegments, wobei das Lagerelement in radialer Richtung eine Erstreckung von maximal 50 % einer Wandstärke des Turmsegments aufweist.

Die ringförmige Konsole dient zum externen Spannen des Turmsegments, insbesondere zum Übertragen einer externen Spannkraft auf ein Turmsegment. Das Turmsegment ist im Zusammenhang mit der ringförmigen Konsole insbesondere ein oberes Turmsegment, vorzugsweise ein Stahlturmsegment, insbesondere ein Turmsegment, das aus Stahl besteht oder zu einem Großteil Stahl aufweist. Vorzugsweise weist das Turmsegment eine radial nach innen gerichteten Absatz auf, insbesondere an seinem unteren Ende.

Der Absatz ist vorzugsweise ausgebildet, die ringförmige Konsole aufzunehmen. Ferne ist vorzugsweise die ringförmige Konsole ausgebildet, auf dem radial nach innen gerichteten Absatz des Turmsegments angeordnet zu werden. Angaben zu Abmessungen, insbesondere Radien, des Turmsegments beziehen sich insbesondere auf den dem radial nach innen gerichteten Absatz des Turmsegments.

Beim externen Spannen des Turmsegments werden Spannelemente im Vergleich zum internen Spannen vorzugsweise nicht durch das Turmsegment, insbesondere dessen Wandung, hindurchgeführt. Beim externen Spannen sind die Spannelemente vorzugsweise beabstandet von der Wandung des Turmsegments oder angrenzend zu dieser, angeordnet. Die Spannelemente sind insbesondere beabstandet oder angrenzend an das Turmsegment an der dem Turminneren zugewandten Seite des Turmsegments angeordnet.

Beim externen Spannen eines Turmsegments wird die Spannkraft über ein Spannelement, das an ein Anschlusselement angeschlossen ist, in die ringförmige Konsole eingeleitet. Über ein Kraftübertragungselement wird die Spannkraft vom Anschlusselement auf ein Lagerelement übertragen und von dort auf das Turmsegment.

Es ist vorgesehen, dass das Lagerelement in radialer Richtung einen größeren Abstand zur Längsachse der ringförmigen Konsole aufweist als das Anschlusselement. Das Lagerelement ist also im Vergleich zum Anschlusselement in radialer Richtung weiter außen angeordnet. Das Kraftübertragungselement überträgt somit die durch das Spannelement eingeleitete Spannkraft von dem radial weiter innen liegenden Anschlusselement auf das weiter außen liegende Lagerelement.

Auf diese Weise können Spannelemente radial weiter innen, beispielsweise beabstandet oder angrenzend zu der dem Turminneren zugewandten Seite des Turmsegments, an das Anschlusselement angeordnet werden, während gleichzeitig die Übertragung der Spankraft auf das Turmsegment durch das Lagerelement in vorteilhafter Weise in radialer Richtung weiter außen erfolgt. So können beispielsweise ungünstige Krafteinleitungen und/oder Momente vermieden oder reduziert werden, die beim externen Spannen insbesondere aufgrund der Beabstandung oder des Angrenzens der Spannelemente zu der der Turminneren zugewandten Seite des Turmsegments auftreten können. dies ermöglicht es, dass externe Spannungen in einer Vielzahl von Türmen einzusetzen, sowohl als einzige oder zusätzliche Spanntechnik bei der (Neu-) Errichtung von Türmen als auch beim Nachrüsten von Türmen.

Ein weiterer Vorteil der erfindungsgemäßen Lösung ist, dass Turmsegmente aus Stahlbeton oder Spannbeton geringerer Komplexität eingesetzt werden können, was den technologischen Aufwand und den Kostenaufwand der Formenherstellung der Turmsegmente sowie der Herstellung und des Aufbaus der Turmsegmente reduziert, die Wartung und Instandhaltung der Spannelemente erleichtert und/oder eine über die Betriebsdauer unabhängig von der wirkenden Betriebsbelastung gegenüber Witterungseinflüssen geschützte vorgespannte Verbindung zwischen dem oberen und unteren Turmabschnitt bzw. zwischen neben- und/oder übereinander angeordneten Turmsegmenten sicherstellt.

Gemäß einem weiteren Vorteil der erfindungsgemäßen Lösung können die externen Spannelemente im Turminneren angeordnet sein, was es ermöglicht, unabhängig von Wind- und Witterungsbedingungen, Wartungs- und Instandhaltungsarbeiten zu jeder Zeit durchzuführen. In besonders vorteilhafter Weise sind hierfür keine oder reduzierte kostenintensive technische Mittel, z.B. Pumpen zum Verpressen der Verbundmasse, und lediglich ein verminderter Zeit- und Personaleinsatz erforderlich.

Ein weiterer Vorteil der erfindungsgemäßen Lösung ist, dass das untere Turmsegment oder der untere Turmabschnitt mit dem oberen Turmsegment oder dem oberen Turmabschnitt verbunden und sogar vorgespannt werden kann, ohne ein als Adapter oder als Verbindungsstück ausgebildetes Turmsegment zwischen das obere und untere Turmsegment bzw. den oberen und unteren Turmabschnitt einzusetzen.

Vorteilhaft an der erfindungsgemäßen Lösung ist ferner, dass bereits sich im Betrieb befindliche Türme und/oder Hybridtürme, d.h. auch Türme mit einem intern vorgespannten Turmsegment oder mit mehreren intern vorgespannten Turmsegmenten und/oder mit einem intern vorgespannten Turmabschnitt oder mit mehreren intern vorgespannten Turmabschnitten, mit der ringförmigen Konsole nachgerüstet werden können. In besonders vorteilhafter Weise können auch Türme und/oder Hybridtürme beispielsweise mit beschädigter interner Verspannung mit der ringförmigen Konsole zum externen Spannen nachgerüstet und so weiter betrieben werden. Weiterhin kann die Vorspannung der Turmsegmente mittels der ringförmigen Konsole angepasst oder korrigiert werden. Insbesondere kann durch Einsatz der ringförmigen Konsole ein externes Spannen ermöglicht werden, welches vorteilhaft ist in Bezug auf Biegung und/oder Ermüdung und/oder den Nettoquerschnitt des Betons nicht überlastet.

Ein weiterer Vorteil der erfindungsgemäßen Lösung ist, dass durch die ringförmige Konsole und insbesondere durch die spezifische Anordnung der Anschlusselemente und der Lagerelemente, insbesondere bei großen wirkenden Betriebskräften, mögliche resultierende temporäre Klaffungen zwischen zwei übereinander angeordneten Turmsegmenten vermindert, wenn nicht sogar vollständig minimiert werden können. Insbesondere kann die ringförmige Konsole in vorteilhafterweise mit weiteren Anschlusselementen zur Aufnahme weiterer Spannelemente, beispielsweise bei steigenden Betriebskräften, nachgerüstet werden.

Die erfindungsgemäße Lösung ist auch dahingehend vorteilhaft, dass das Eigenfrequenzverhalten des Turmsegments und oder des Turmabschnitts und oder des Hybridturms, wenn überhaupt, lediglich unwesentlich beeinflusst wird. In vorteilhafterweise wird deren Eigenfrequenzverhalten bevorzugt nicht, wie aus Anordnungen und/oder Befestigungen von Lamellen und/oder Manschetten an der Innenwand und/oder an der Außenwand bekannt, nachteilig beeinflusst.

Im vorliegenden Text beziehen sich Positions- und Lageangaben, wie beispielsweise "oben" und "unten" oder "außen" und "innen", sofern nicht anders ausgeführt auf den Einbauzustand eines Hybridturms und insbesondere der im Turmabschnitt und/oder Hybridturm eingebauten Ringkonsole. So bildet im Einbauzustand in der Regel ein Fundament eines Hybridturms dessen unteres Ende und eine Gondel dessen oberes Ende. Im Einbauzustand der ringförmigen Konsole und/oder des Turmsegments und/oder des Turmabschnitts und/oder des Hybridturms sind deren Längsachsen vorzugsweise im Wesentlichen vertikal ausgerichtet und besonders bevorzugt koaxial zueinander angeordnet. Beim Transport und/oder bei Wartungs- und/oder Instandhaltungsarbeiten an dem Hybridturm und/oder an der ringförmigen Konsole und/oder an dem Turmsegment und/oder an dem Turmabschnitt können einzelne oder alle Längsachsen auch nicht vertikal und/oder nicht koaxial ausgerichtet sein. Angaben zur Längsrichtung bzw. zur Höhe beziehen sich auf eine im Wesentlichen parallel zur Längsachse verlaufende Richtung.

Der Querschnitt eines Hybridturms in einer Ebene orthogonal zu seiner Längsachse ist in der Regel ringförmig ausgebildet. Die ringförmige Konsole weist einen ringförmigen Querschnitt in einer Ebene orthogonal zur Längsachse auf. Auch ein Turmsegment und/oder ein Turmabschnitt weist vorzugsweise einen ringförmigen Querschnitt in einer Ebene orthogonal zur Längsachse auf.

Eine ringförmiger Querschnitt kann beispielsweise kreisförmig, oval, oder polygonal, beispielsweise dreieckig oder rechteckig, ausgebildet sein. Als ringförmig wird hier somit eine über den Umfang geschlossene Form verstanden, die eine kreisförmige Ausbildung umfasst, aber nicht auf diese beschränkt ist.

Ein Hybridturm, und in der Regel entsprechen auch seine Turmabschnitte und/oder Turmsegmente und/oder eine ringförmige Konsole, kann zylindrisch ausgebildet sein, d.h. der Außen- und/oder Innenradius ist über die Höhe unveränderlich. In diesem Fall weisen der Hybridturm und/oder seine Turmabschnitte und/oder seine Turmsegmente keinen Neigungswinkel zur Längsachse auf.

In der Regel verjüngt sich ein Hybridturm mit der Höhe, d.h. sein Außen- und/oder Innenradius nimmt mit der Höhe ab. Diese Verjüngung kann gleichmäßig oder ungleichmäßig erfolgen. Ferner kann die Verjüngung nur in einzelnen Teilen des Hybridturms vorhanden oder in verschiedenen Teilen des Hybridturms unterschiedlich sein. Die Verjüngung kann auch stufenweise erfolgen. Ein Hybridturm und/oder ein Turmabschnitt und/oder ein Turmsegment und/oder die ringförmige Konsole ganz oder abschnittsweise konisch und/oder kegelstumpfförmig ausgebildet sein. Ein Hybridturm und/oder ein Turmabschnitt und/oder ein Turmsegment und/oder die ringförmige Konsole können so ganz oder abschnittsweise gleiche oder unterschiedliche Neigungswinkel zur Längsachse aufweisen. Insbesondere können beispielsweise die Neigungswinkel einer Innenseite und einer Außenseite eines Hybridturms und/oder eines Turmabschnitts und/oder eines Turmsegments und/oder der ringförmigen Konsole gleich sein oder sich unterscheiden. Ein Neigungswinkel kann sowohl radial nach innen als auch radial nach außen gerichtet sein. Insbesondere ist der Neigungswinkel größer 0° und/oder bevorzugt mindestens 1°, 5°, 10°, 15° oder 20° und maximal 1°, 5°, 10°, 15° oder 20°.

Hybridtürme, deren Turmabschnitte und deren einzelne Turmsegmente umfassen typischerweise eine Wandung mit einer Außenwand, d.h. eine dem Turminneren abgewandte Seite, und einer Innenwand, d.h. eine dem Turminneren zugewandte Seite. Die Wandung weist eine Wandstärke auf, die vorzugsweise ausgebildet, ist Betriebskräfte aufzunehmen. Die Wandstärke ist die Dicke der Wandung von der Innenwand zur Außenwand in radialer Richtung und/oder in Richtung einer Lotrechten zur Innenwand. Insbesondere kann die Wandstärke in Einbaulage über eine Höhe variieren. Ferner vorzugsweise kann sich die Wandstärke über die Höhe verjüngen, d.h. abnehmen, insbesondere kann sich die Wandstärke nach oben hin verjüngen. Die Wandstärke der Wandung kann variieren, insbesondere kann die Wandstärke der Wandung über die Höhe in radialer Richtung variieren. Vorzugsweise nimmt die Wandstärke der Wandung nach oben hin ab. Alternativ vorzugsweise ist die Wandstärke über die Höhe konstant.

Die Spannelemente verlaufen vorzugsweise parallel zu einer Richtung, die parallel zu einer Längsachse des Turmsegments und/oder des Turmabschnitts und/oder des Hybridturms ausgerichtet ist. Die Spannelement können auch zur Längsachse des Turmsegments und/oder des Turmabschnitts und/oder des Hybridturms geneigt sein. Dies kann insbesondere bevorzugt sein, wenn das Turmsegment und/oder der Turmabschnitt und/oder der Hybridturm sich verjüngt und/oder konisch oder kegelstumpfförmig ausgebildet ist. Vorzugsweise entspricht ein Neigungswinkel eines Spannelements dem Neigungswinkel des Turmsegments und/oder des Turmabschnitts und/oder des Hybridturms, insbesondere einer inneren oder äußeren Seite der Wandung des Turmsegments und/oder des Turmabschnitts und/oder des Hybridturms. Ein Spannelement kann auch einen anderen Neigungswinkel zur Vertikalen aufweisen als das Turmsegment und/oder der Turmabschnitt und/oder der Hybridturm, wobei hierbei bevorzugt ist, dass die Differenz in den Neigungswinkeln zwischen Spannelement und Turmsegment und/oder Turmabschnitt und/oder Hybridturm minimal oder maximal 1°, 2°, 3°, 5°, 7,5°, 10°, 15° oder 20° beträgt. Ferner vorzugsweise kann das Spannelement zu unterschiedlichen Turmsegmenten und/oder unterschiedlichen Turmabschnitten unterschiedliche Neigungswinkel aufweisen. Insbesondere kann das Spannelement bei Übergängen von einem oberen zu einem unteren Turmsegment und/oder von einem oberen zu einem unteren Turmabschnitt unterschiedliche Neigungswinkel zu diesen aufweisen.

Die Spannelemente können beispielsweise Stangen umfassen und/oder stangenförmig ausgebildet sein. Die Spannelemente können Seile umfassen oder seilförmig ausgebildet sein. Die Spannelemente sind vorzugsweise aus einem Material ausgebildet, das aus Stahl besteht oder Stahl umfasst. Ferner vorzugsweise kann das Material der Spannelemente aus Fasern bestehen oder Fasern umfassen, insbesondere Stahlfasern und/oder Kohlenstofffasern und/oder Aramidfasern und/oder Keramikfasern und/oder Naturfasern und/oder Glasfasern etc. Ein Spannelement kann eine Einlage und/oder Litzen umfassen, wobei eine Litze vorzugsweise mehrere Drähte umfasst. Bevorzugt bildet die Einlage den Kern eines Spannelements. Vorzugsweise ist die Einlage von Litzen und/oder Drähten eingefasst. Ein Material der Einlage kann Kunststoff und/oder Stahl und/oder Natur- und/oder Kunstfasern umfassen, wobei die Einlage bevorzugt drahtartig und/oder seilartig und/oder stabartig und/oder faserartig und/oder stangenartig ausgebildet ist.

Das Anschlusselement ist zum Anschließen eines Spannelements, insbesondere zum Anschließen eines Anschlusskopfs des Spannelements, ausgebildet. Das Anschlusselement ist vorzugsweise ausgebildet, mit dem Spannelement lösbar, insbesondere durch eine Schraubverbindung, und/oder vorgespannt, insbesondere hydraulisch vorgespannt, verbunden zu werden. Das Spannelement ist vorzugsweise ausgebildet, mit dem Anschlusselement lösbar, insbesondere durch eine Schraubverbindung, und/oder vorgespannt, insbesondere hydraulisch vorgespannt, verbunden zu werden.

Das Anschlusselement ist mit dem ringförmigen Kraftübertragungselement vorzugsweise stoffschlüssig, insbesondere verschweißt und/oder verklebt, und/oder kraftschlüssig, insbesondere verschraubt, und/oder formschlüssig, insbesondere in Form einer Steckverbindung, verbunden. Das Anschlusselement kann auch integral mit dem ringförmigen Kraftübertragungselement ausgebildet sein.

Integral wird in dieser Beschreibung insbesondere als einstückig verstanden.

Das Lagerelement ist zum Übertragen der Spannkraft auf Turmsegment ausgebildet. Das Lagerelement ist mit dem ringförmigen Kraftübertragungselement vorzugsweise stoffschlüssig, insbesondere verschweißt und/oder verklebt, und/oder kraftschlüssig, insbesondere verschraubt, und/oder formschlüssig, insbesondere in Form einer Steckverbindung, verbunden. Das Lagerelement kann auch integral mit dem ringförmigen Kraftübertragungselement ausgebildet sein. Vorzugsweise bildet ein unteres Ende, insbesondere ein unteres radial außenliegendes Ende, des ringförmigen Kraftübertragungselements das Lagerelement aus. Vorzugsweise ist das Lagerelement in Umfangsrichtung im Wesentlichen kontinuierlich oder unterbrochen ausgebildet. Unterbrechungen des Lagerelements und/oder Lagerelementabschnitte sind vorzugsweise äquidistant und/oder in Umfangsrichtung verteilt angeordnet.

Weiterhin ist bevorzugt, dass das Lagerelement in radialer Richtung eine Erstreckung von mindestens 0 %, 5 %, 10 %, 15 %, 20 %, 25 %, 30 %, 35 %, 40 %, 45 % jedoch erfindungsgemäß maximal 50 % einer Wandstärke des Turmsegments aufweist. Vorzugswese ist das Lagerelement in Abhängigkeit der wirkenden Lasten und/oder Kräfte und/oder der Turmhöhe und/oder des Materials dimensioniert. Beispielsweise kann ein Lagerelement eine Erstreckung in radialer Richtung von 200 bis 400 mm, insbesondere von 240 bis 380 mm aufweisen, insbesondere, wenn das Lagerelement als Beton-Fertigteil ausgebildet ist.

Vorzugsweise weist die ringförmige Konsole zwei oder mehrere Spannelemente und/oder zwei oder mehrere Anschlusselemente und/oder zwei oder mehrere Lagerelemente auf. Vorzugsweise ist die Anzahl an Spannelementen gleich der Anzahl an Anschlusselementen. Vorzugsweise sind die Spannelemente und/oder die Anschlusselemente und/oder die Lagerelemente äquidistant, insbesondere in Umfangsrichtung, voneinander beabstandet. Weiterhin vorzugsweise sind mehrere Anschlusselemente in einer Anschlussebene angeordnet und/oder mehrere Lagerelement in einer Lagerebene angeordnet, wobei die Anschlussebene und/oder die Lagerebene im Wesentlichen horizontal und/oder orthogonal zur Längsachse ausgerichtet ist. Vorzugswese ist die Anzahl der Anschlusselemente und/oder Spannelemente und/oder Lagerelemente in Abhängigkeit der wirkenden Lasten und/oder des Durchmessers der Spannelemente und/oder deren Verteilung gewählt.

In einer bevorzugten Ausführungsform der ringförmigen Konsole ist vorgesehen, dass in radialer Richtung der Abstand des Anschlusselements zur Längsachse kleiner oder gleich ist als ein Innenradius eines Turmsegments.

Dies ermöglicht es, das Spannelement im Turminneren zu führen und/oder anzuordnen, vorzugsweise ohne das Spannelement durch das Turmsegment, insbesondere dessen Wandung, hindurchzuführen. Vorzugsweise ist das Anschlusselement mit einem Abstand zur Längsachse derart angeordnet, dass ein am Anschlusselement angeschlossenes Spannelement beabstandet oder angrenzend zu einer dem Turminneren zugewandten Seite des Turmsegments ist.

Vorzugsweise ist der Innenradius des Turmsegments der Innenradius an der oberen inneren Kante des Turmsegments.

Mehrere Anschlusselemente weisen vorzugsweise in radialer Richtung alle den gleichen Abstand zur Längsachse auf.

Vorzugsweise beträgt der Abstand des Anschlusselements zur Längsachse in radialer Richtung mindestens oder maximal 75%, 80%, 85%, 90%, 95% oder 97,5% des Innenradius des Turmsegments. Der Abstand des Anschlusselements zur Längsachse in radialer Richtung berücksichtigt vorzugsweise eine etwaig vorhandene oder anzubringende Schweißnaht und/oder beträgt vorzugsweise 10-30 mm, insbesondere ca. 20mm.

In einer weiteren bevorzugten Ausführungsform der ringförmigen Konsole ist vorgesehen, dass in radialer Richtung der Abstand des Lagerelements zur Längsachse kleiner oder gleich ist zu einem Außenradius des Turmsegments, und/oder größer ist als ein Innenradius des Turmsegments.

Diese Ausführungsform ermöglicht es in vorteilhafterweise, die Spannkraft über das Lagerelement in das Turmsegment einzuleiten. In einer bevorzugten Variante dieser Ausführungsform ist das Lagerelement derart mit einem Abstand zu Längsachse angeordnet, dass das Lagerelement in der äußeren Hälfte, und insbesondere bevorzugt im äußeren Drittel, der Wandstärke des Turmsegments angeordnet ist.

Vorzugsweise ist der Außenradius des Turmsegments der Außenradius an der oberen äußeren Kante des Turmsegments.

Vorzugsweise beträgt der Abstand des Anschlusselements zur Längsachse in radialer Richtung mindestens oder maximal 90%, 95% oder 97,5% des Außenradius des Turmsegments. Der Abstand des Anschlusselements zur Längsachse in radialer Richtung berücksichtigt vorzugsweise eine etwaig vorhandene oder anzubringende Schweißnaht und/oder beträgt vorzugsweise 10-30 mm, insbesondere ca. 20mm.

In einer weiteren bevorzugten Ausführungsform der ringförmigen Konsole ist vorgesehen, dass das ringförmige Kraftübertragungselement einen oberen Gurt und/oder einen unteren Gurt aufweist.

Der obere und/oder untere Gurt sind/ist ausgebildet, ggf. mit weiteren Elementen des Kraftübertragungselements, eine Spannkraft, von dem Anschlusselement auf das Lagerelement zu übertragen. Vorzugsweise ist das Anschlusselement an dem oberen Gurt angeordnet, insbesondere an einer inneren oberen Seite des oberen Gurts. Vorzugsweise ist das Lagerelement an dem unteren Gurt angeordnet, insbesondere an einer unteren äußeren Seite des unteren Gurts. Ferner vorzugsweise sind der obere Gurt und untere Gurt koaxial zueinander angeordnet und insbesondere koaxial zur Längsachse der ringförmigen Konsole angeordnet. Vorzugsweise weist der untere Gurt einen größeren oder kleinen Außendurchmesser und/oder einen größeren oder kleineren Innendurchmesser auf als der obere Gurt.

In einer weiteren bevorzugten Ausführungsform der ringförmigen Konsole ist vorgesehen, dass das ringförmige Kraftübertragungselement einen inneren Steg und/oder einen äußeren Steg aufweist.

Der innere und/oder äußere Steg sind/ist ausgebildet, ggf. mit weiteren Elementen des Kraftübertragungselements, eine Spannkraft von dem Anschlusselement auf das Lagerelement zu übertragen. Vorzugsweise ist das Anschlusselement an dem inneren Steg angeordnet, insbesondere an einer inneren oberen Seite des inneren Stegs. Vorzugsweise ist das Lagerelement an dem äußeren Steg angeordnet, insbesondere an einer unteren äußeren Seite des äußeren Stegs.

Ein Vorteil hieran ist, dass mit dem inneren Steg und/oder dem äußeren Steg und/oder dem oberen Gurt und/oder dem unteren Gurt mit geringem Aufwand eine leichte und gleichermaßen verwindungssteife ringförmige Konsole zum externen Spannen eines Hybridturms hergestellt und montiert werden kann.

Vorzugsweise ist der innere Steg in radialer Richtung innerhalb des äußeren Stegs angeordnet ist. Ferner vorzugsweise sind der innere und äußere Steg koaxial zueinander angeordnet und insbesondere koaxial zur Längsachse der ringförmigen Konsole angeordnet. Vorzugsweise weist der äußere Steg einen größeren Außendurchmesser und/oder einen größeren Innendurchmesser auf als der innere Steg.

In einer weiteren bevorzugten Ausführungsform der ringförmigen Konsole ist vorgesehen, dass das Anschlusselement an dem oberen Gurt und/oder an dem inneren Steg und/oder an dem äußeren Steg angeordnet ist.

Vorzugsweise ist das Anschlusselement an einem inneren Ende des oberen Gurts und/oder an einem oberen Ende des inneren Stegs angeordnet. Das Lagerelement ist vorzugsweise an einem unteren Ende des inneren Stegs und/oder einen einem unteren Ende des äußeren Stegs und/oder an einem äußeren Ende des unteren Gurts angeordnet.

Vorzugsweise sind der obere Gurt und/oder untere Gurt und/oder innere Steg und/oder äußere Steg und/oder das Lagerelement und/oder das Anschlusselement miteinander stoffschlüssig, insbesondere verschweißt und/oder verklebt, und/oder kraftschlüssig, insbesondere verschraubt, und/oder formschlüssig, insbesondere in Form einer Steckverbindung, verbunden. Der obere Gurt und/oder untere Gurt und/oder innere Steg und/oder äußere Steg und/oder das Lagerelement und/oder das Anschlusselement können auch integral ausgebildet sein.

In einer weiteren bevorzugten Ausführungsform der ringförmigen Konsole ist vorgesehen, dass das Lagerelement als Verlängerung des äußeren Stegs und/oder des unteren äußeren Endes des inneren Steges ausgebildet ist.

Vorzugsweise ist das Lagerelement als ein nach unten, über den unteren Gurt hinausragender Fortsatz des äußeren Stegs ausgebildet. Weiterhin vorzugsweise ist das Lagerelement als ein nach unten über den unteren Gurt hinaustragender und/oder in radialer Richtung nach außen über den äußeren Steg hinausragender Fortsatz des inneren Stegs ausgebildet. Ferner vorzugsweise kann der Fortsatz des äußeren Stegs und/oder des inneren Stegs abgewinkelt fortgeführt sein.

Vorzugsweise ist der Fortsatz mit dem äußeren Steg und/oder dem inneren Steg und/oder dem unteren Gurt stoffschlüssig verbunden. Ferner vorzugsweise ist der Fortsatz integraler Bestandteil des äußeren Stegs und/oder des inneren Stegs und/oder des unteren Gurts.

In einer weiteren bevorzugten Ausführungsform der ringförmigen Konsole ist vorgesehen, dass der innere Steg und/oder der äußere Steg und/oder der obere Gurt und/oder der untere Gurt und/oder das Lagerelement eine flächige Erstreckung in einer Erstreckungsebene aufweist. Bei einer flächigen Erstreckung sind die Dimensionen des jeweiligen Elements in der Erstreckungsebene um ein Vielfaches größer als in einer Richtung orthogonal hierzu. Die Erstreckungsebene kann eben, d.h. ungekrümmt, ausgebildet sein. Die Erstreckungsebene kann auch in einer oder mehrere Richtungen gekrümmt sein und vorzugsweise einen Krümmungsradius aufweisen.

Beispielsweise kann die Erstreckungsebene des Lagerelements gekrümmt sein, insbesondere mit einem Krümmungsradius der im Wesentlichen dem Außenradius der ringförmigen Konsole entspricht und/oder in einer Ausrichtung in Umfangsrichtung. Vorzugsweise weisen auch der innere Steg und/oder der äußere Steg gekrümmte Erstreckungsebenen auf, die koaxial zueinander angeordnet sein können. Die Erstreckungsebenen des Lagerelements und/oder des inneren Stegs und/oder des äußeren Stegs können im wesentlichen parallel zu Längsachse verlaufen oder zu dieser geneigt sein.

Der obere Gurt und/oder der untere Gurt weisen vorzugsweise eine ebene Erstreckungsebene auf, die vorzugsweise horizontal ausgerichtet ist oder zur Horizontalen geneigt sein kann. Vorzugsweise sind die Erstreckungsebene des oberen Gurts und des unteren Gurts im Wesentlichen parallel oder in einem Winkel zueinander angeordnet.

Es kann auch bevorzugt sein, mehrere innere Stege und/oder mehrerer äußerer Stege vorzusehen. Hierbei kann es ferner bevorzugt sein, dass sich die Erstreckungsebenen der mehreren inneren Stege und/oder der mehreren äußeren Stege in Ebenen erstrecken, die jeweils von der Längsachse und einem Radius aufgespannt werden. Mehrere innere Stege und/oder mehrere äußere Stege sind vorzugsweise voneinander beabstandet, insbesondere äquidistant und/oder in Umfangsrichtung verteilt angeordnet. Die Stege haben unter anderen den Vorteil, die Lasteinleitung zu verbessern und/oder ein Beulen der Gurte zu verhindern. Die Anzahl der Stege ist vorzugsweise in Abhängigkeit der Spannelemente, insbesondere deren Anzahl und/oder Abstand, gewählt.

Ferner vorzugsweise ist die Erstreckungsebene des oberen Gurts und/oder des unteren Gurts und/oder des inneren Stegs und/oder des äußeren Stegs von einem jeweils radial innenliegenden Ende zu einem jeweils radial außenliegenden Ende nach unten oder nach oben geneigt.

Ferner vorzugsweise ist die Erstreckungsebene des inneren Stegs und/oder die Erstreckungsebene des äußeren Stegs orthogonal zu der Erstreckungsebene des oberen Gurts und/oder zu der Erstreckungsebene des unteren Gurts angeordnet.

Insbesondere sind die jeweiligen Erstreckungsebenen des oberen Gurts und/oder des unteren Gurts und/oder des inneren Stegs und/oder des äußeren Stegs und/oder des Lagerelements zueinander und/oder zu einer Horizontalen und/oder zur Längsachse um mindestens oder maximal 0°, 5°, 10°, 15°, 20°, 30°, 40°, 45°, 60° oder 90° geneigt angeordnet.

Eine innerhalb der Erstreckungsebene liegende erste Richtung, in der die Erstreckung eines Elements um ein Vielfaches größer ist als in einer zweiten, insbesondere zur ersten orthogonalen, Richtung innerhalb der Erstreckungsebene, kann diese erste Richtung auch als Haupterstreckungsrichtung des Elements bezeichnet werden.

Der obere Gurt und/oder der untere Gurt und/oder das Lagerelement weist vorzugsweise eine Haupterstreckungsrichtung in Umfangsrichtung auf. Vorzugsweise ist eine Erstreckung des oberen Gurts und/oder des unteren Gurts und/oder des Lagerelements in der Erstreckungsebene in Haupterstreckungsrichtung um ein Vielfaches größer als eine Erstreckung des oberen Gurts und/oder des unteren Gurts und/oder des Lagerelements in der Erstreckungsebene orthogonal zur Haupterstreckungsrichtung, insbesondere in radialer Richtung.

Der innere Steg und/oder der äußere Steg kann eine Haupterstreckungsrichtung in Umfangsrichtung aufweisen, insbesondere dann, wenn ein ringförmiger innerer Steg und/oder ein ringförmiger äußerer Steg vorgesehen ist. Vorzugsweise ist eine Erstreckung des inneren Stegs und/oder des äußeren Stegs in der Erstreckungsebene in Haupterstreckungsrichtung um ein Vielfaches größer als eine Erstreckung des inneren Stegs und/oder des äußeren Stegs in der Erstreckungsebene orthogonal zur Haupterstreckungsrichtung, insbesondere in Richtung der Längsachse.

Im folgenden werden mehrere weitere bevorzugte Ausführungsformen beschrieben, welche insbesondere die Anordnung des inneren Stegs und/oder des äußeren Stegs in Relation zum oberen Gurt und/oder unteren Gurt betreffen.

Vorzugsweise erstreckt sich der innere Steg von einem inneren Ende des oberen Gurts zu einem inneren Ende des unteren Gurts. Der innere Steg kann sich auch von einem inneren Ende des oberen Gurts zu einem äußeren Ende des unteren Gurts erstrecken. Bevorzugt ist ferner, dass sich der innere Steg von einem äußeren Ende des oberen Gurts zu einem inneren Ende des unteren Gurts erstreckt.

Vorzugsweise erstreckt sich der äußere Steg von einem äußeren Ende des oberen Gurts zu einem äußeren Ende des unteren Gurts. Der äußere Steg kann sich auch von einem äußeren Ende des oberen Gurts zu einem inneren Ende des unteren Gurts erstrecken. Bevorzugt ist ferner, dass sich der äußere Steg von einem inneren Ende des oberen Gurts zu einem äußeren Ende des unteren Gurts erstreckt.

In einer weiteren bevorzugten Ausführungsform der ringförmigen Konsole ist vorgesehen, dass der innere Steg und/oder der äußere Steg und/oder der obere Gurt und/oder der untere Gurt und/oder das Lagerelement eine Fachwerkstruktur mit einer oder mehreren Ausnehmungen aufweist.

Fachwerkstrukturen umfassen eine oder mehrere Ausnehmungen, wobei die Ausnehmungen beispielsweise kreisförmig, oval, oder polygonal, insbesondere dreieckig, rechteckig oder mehreckig, sind, wobei die Ecken abgerundet sein können. Vorzugsweise sind die Fachwerkstrukturen in den Erstreckungsebenen des inneren Stegs und/oder des äußeren Stegs und/oder des unteren Gurts und/oder des oberen Gurts derart angeordnet, dass die aus dem Spannelement induzierte Spannkraft von dem Anschlusselement zu dem Lagerelement übertragen werden kann. Ferner vorzugsweise sind die Ausnehmungen der Fachwerkstruktur in der Erstreckungsebene des Stegs und/oder des äußeren Stegs und/oder des unteren Gurts und/oder des oberen Gurts und/oder des Lagerelements in kraftflussarmen Abschnitten der Erstreckungsebenen angeordnet. Ausnehmungen sind vorzugsweise nicht im Bereich der Krafteinleitung und der Kraftausleitung angeordnet.

Ein weiterer Vorteil hieran ist, dass mit der Fachwerkstruktur ausgebildete flächige Erstreckungen der Erstreckungsebenen des inneren Stegs und/oder des äußeren Stegs und/oder des oberen Gurts und/oder des unteren Gurts und/oder des Lagerelements Material und Gewicht eingespart und somit letztlich Kosten reduziert werden können. In vorteilhafter Weise erleichtert diese Fachwerkstruktur weiterhin sowohl den Transport als auch die Montage der ringförmigen Konsole.

In einer weiteren bevorzugten Ausführungsform der ringförmigen Konsole ist vorgesehen, dass der innere Steg und/oder der äußere Steg und/oder der obere Gurt und/oder der untere Gurt eine Durchgangsöffnung zur Durchführung des Spannelements aufweist.

Eine Durchgangsöffnung zur Durchführung des Spannelements ist zur Längsachse vorzugsweise mit einem Abstand derart angeordnet, dass das Spannelement beabstandet oder angrenzend zu einem Turmsegment geführt werden kann, und insbesondere nicht durch das Turmsegment hindurchgeführt werden muss. Die Durchgangsöffnung zur Durchführung des Spannelements ist ferner vorzugsweise zur Längsachse mit einem Abstand derart angeordnet, dass das Spannelement im Turminneren geführt und angeordnet werden kann.

Vorzugsweise ist die Durchgangsöffnung zur Durchführung des Spannelements mit einem Abstand von mindestens dem Radius des innenliegenden Endes des inneren und/oder äußeren Stegs und maximal mit dem Radius der inneren Kante des oberen und/oder unteren Turmsegments zur Längsachse angeordnet.

In einer weiteren bevorzugten Ausführungsform der ringförmigen Konsole ist vorgesehen, dass das ringförmige Kraftübertragungselement eine Konsolen-Schubsperranordnung zum Eingriff in eine obere und/oder untere Turmsegment- Schubsperranordnung umfasst.

Die Konsolen-Schubsperranordnung ist vorzugsweise im Wesentlichen parallel zur Längsachse angeordnet und/oder ausgebildet, im Eingriff mit einer oberen und/oder unteren Turmsegment-Schubsperranordnung, radial und/oder tangential wirkende Kräfte aufzunehmen. Vorzugsweise werden hierdurch radiale und/oder tangentiale Relativbewegungen zwischen der ringförmigen Konsole und/oder einem unteren Turmsegment und/oder einem oberen Turmsegment verhindert oder verringert.

Vorzugsweise umfasst die Konsolen-Schubsperranordnung eine Schubsperrausnehmung und/oder ein Schubsperrvorsprung. Bevorzugt ist die Konsolen-Schubsperranordnung ausgebildet, eine formschlüssige und/oder kraftschlüssige und/oder stoffschlüssige Verbindung im Eingriff mit der oberen und/oder unteren Turmsegment-Schubsperranordnung einzugehen. Insbesondere ist die Konsolen-Schubsperranordnung ausgebildet, eine lösbare oder nicht lösbare Verbindung im Eingriff mit der oberen und/oder unteren Turmsegment-Schubsperranordnung einzugehen.

Vorzugsweise ist ein Schubsperrvorsprung als zylinderförmiger und/oder konischer Vorsprung, besonders bevorzugt umfassend Bolzen, Dorn oder Nocken, ausgebildet. Ferner vorzugsweise ist der Schubsperrvorsprung ausgebildet, von einer Schubsperrausnehmung der Turmsegment-Schubsperranordnung aufgenommen zu werden. Ferner vorzugsweise ist eine Schubsperrausnehmung der Konsolen-Schubsperranordnung zur Aufnahme eines Schubsperrvorsprung der Turmsegment-Schubsperranordnung, bevorzugt zur Aufnahme von Bolzen, Dorne oder Nocken, ausgebildet. Die Konsolen-Schubsperranordnung kann auch als Wellenprofil und/oder Zahnprofil ausgebildet sein, wobei das Zahnprofil beispielsweise dreieckige oder rechteckige Zähne umfassen kann.

Ferner bevorzugt umfasst die Konsolen-Schubsperranordnung mehrere Schubsperrvorsprünge und/oder Schubsperrausnehmungen, die vorzugsweise äquidistant und/oder in Umfangsrichtung verteilt angeordnet sind. Die Anzahl der Schubsperrvorsprünge und/oder Schubsperrausnehmungen ist vorzugsweise in Abhängigkeit der Spannelemente, insbesondere deren Anzahl und/oder Abstand, gewählt.

Vorzugsweise ist die Konsolen-Schubsperranordnung mit einem Abstand zur Längsachse angeordnet, der kleiner oder gleich ist zu einem Außenradius des Turmsegments und/oder größer oder gleich ist als der Innenradius des Turmsegments.

In einer weiteren bevorzugten Ausführungsform der ringförmigen Konsole ist vorgesehen, dass das Kraftübertragungselement integral ausgebildet ist oder mehrere Konsolensegmente aufweist.

Das Kraftübertragungselement zur Übertragung der Spannkraft von einem Anschlusselement auf ein Lagerelement kann integral ausgebildet sein.

Das Kraftübertragungselement zur Übertragung der Spannkraft von einem Anschlusselement auf ein Lagerelement kann jedoch auch mehrere Konsolensegmente aufweisen, die jeweils vorzugsweise ringsegmentförmig ausgebildet sind. Dies ermöglicht einen einfachen und schnellen Transport sowie eine vergleichsweise einfache und auch nachträgliche Montage, beispielsweise durch Bereitstellung der Konsolensegmente durch eine Turmtür hindurch.

Die Konsolensegmente können miteinander zu einer ringförmigen Konsole verbunden werden. Die Verbindung kann lösbar oder nicht lösbar ausgebildet sein. Die Verbindung kann kraftschlüssig, beispielsweise als Schraubverbindung, und/oder stoffschlüssig, beispielsweise als Schweißverbindung, und/oder als formschlüssige Verbindung realisiert sein.

In einer weiteren bevorzugten Ausführungsform der ringförmigen Konsole ist vorgesehen, dass die Konsolensegmente an mindestens einer Stirnseite in Umfangsrichtung eine Verbindungsanordnung zur Verbindung der Konsolensegmente untereinander aufweisen. Vorzugsweise werden die Konsolensegmente mittels der an mindestens einer Stirnseite in Umfangsrichtung aufweisenden Verbindungsanordnung zu einer ringförmigen Konsole verbunden. Die Verbindungsanordnung kann im Wesentlichen orthogonal zu einer Umfangsrichtung angeordnet sein. Vorzugsweise umfasst die Verbindungsanordnung ein erstes und/oder ein zweites Befestigungselement, wobei das erste und/oder das zweite Befestigungselement als Bolzen und/oder Nieten und/oder Schrauben ausgebildet sein können. Insbesondere umfasst die Verbindungsanordnung als erstes Befestigungselement einen Druckstempel und als zweites Befestigungselement eine Scher-Lochleibungsverbindung.

Vorzugsweise weisen die Konsolensegmente Schnittstellen auf, über die sie miteinander zu einer ringförmigen Konsole verbunden werden können. Die Schnittstellen können im Wesentlichen orthogonal zu einer Umfangsrichtung angeordnet sein.

In einer weiteren bevorzugten Ausführungsform der ringförmigen Konsole ist vorgesehen, dass die ringförmige Konsole, insbesondere der innere Steg und/oder der äußere Steg und/oder der obere Gurt und/oder der untere Gurt und/oder das Anschlusselement und/oder das Lagerelement und/oder die Konsolen-Schubsperranordnung, aus Stahl, vorzugsweise Baustahl, oder aus Gusseisen oder aus Beton, vorzugsweise Stahlbeton oder Spannbeton, besteht. Die ringförmige Konsole, insbesondere der innere Steg und/oder der äußere Steg und/oder der obere Gurt und/oder der untere Gurt und/oder das Anschlusselement und/oder das Lagerelement und/oder die Konsolen-Schubsperranordnung, kann auch Stahl, vorzugsweise Baustahl, und/oder Gusseisen und/oder Beton, vorzugsweise Stahlbeton oder Spannbeton, aufweisen.

Gemäß einem weiteren Aspekt der Erfindung wird die eingangs genannte Aufgabe gelöst durch ein externes Spannsystem eines Hybridturms, vorzugsweise eines Hybridturms einer Windenergieanlage, umfassend eine zuvor beschriebene ringförmige Konsole, ein Spannelement mit einem Anschlusskopf an einem ersten Ende zum Übertragen einer Spannkraft auf das Anschlusselement und einem Anker an einem zweiten Ende zum Übertragen der Spannkraft auf ein unteres Turmsegment.

Vorzugsweise ist der Anschlusskopf des Spannelements ausgebildet, mit dem Anschlusselement der ringförmigen Konsole verbunden zu werden. Die Verbindung kann lösbar oder nicht lösbar ausgebildet sein. Insbesondere kann die Verbindung kraftschlüssig und/oder formschlüssig und/oder stoffschlüssig ausgebildet sein. Ferner vorzugsweise ist der Anker zur Befestigung an einem Turmsegment, insbesondere an einem unteren Turmsegment, ausgebildet, wobei die Befestigung vorzugsweise lösbar oder nicht lösbar ausgebildet sein kann. Insbesondere kann die Verbindung kraftschlüssig und/oder formschlüssig und/oder stoffschlüssig ausgebildet sein.

Gemäß einem weiteren Aspekt der Erfindung wird die eingangs genannte Aufgabe gelöst durch einen Turmabschnitt eines Hybridturms, vorzugsweise einen Hybridturm einer Windenergieanlage, umfassend ein oberes Turmsegment mit einem radial nach innen gerichteten Absatz, eine auf dem Absatz im inneren des oberen Turmsegments angeordnete ringförmige Konsole eines zuvor beschriebenen externen Spannsystems, und ein unterhalb des oberen Turmsegments angeordnetes unteres Turmsegment, an dem ein Spannelement mittels eines Ankers des externen Spannsystems angeordnet.

Die ringförmige Konsole überträgt vorzugsweise die an dem Anschlusselement eingeleiteten Spannkräfte über das Lagerelement auf den radial nach innen gerichteten Absatz des oberen Turmsegments auf das untere Turmsegment. Das Spannelement ist vorzugsweise mit dem Anker an dem unteren Turmsegment und/oder Turmabschnitt zum externen Spannen des unteren Turmsegments und/oder Turmabschnitts befestigt. Vorzugsweise ist der Anker lösbar, beispielsweise mittels einer Schraubverbindung, mit dem unteren Turmsegment und/oder Turmabschnitt zum externen Spannen des unteren Turmsegments und/oder Turmabschnitts befestigt.

Bevorzugt weist der radial nach innen gerichtete Absatz des oberen Turmsegments einen gleichen Außenradius auf wie der Außenradius der oberen äußeren Kante eines unmittelbar darunter angeordneten unteren Turmsegments und/oder einen gleichen Innenradius auf wie der Innenradius der oberen inneren Kante eines unmittelbar darunter angeordneten unteren Turmsegments.

In einer weiteren bevorzugten Ausführungsform des Turmabschnitts eines Hybridturms ist vorgesehen, dass zwischen dem oberen Turmsegment und dem mit dem Anker versehenen unteren Turmsegment mindestens ein weiteres Turmsegment angeordnet ist.

In einer bevorzugten Variante dieser Ausführungsform ist mindestens ein weiteres Turmsegment zwischen dem oberen Turmsegment und dem mit dem Anker verbundenen unteren Turmsegment angeordnet. Auf diese Weise können die zwischen dem oberen Turmsegment und dem mit dem Anker verbundenen unteren Turmsegment angeordneten Turmsegmente mittels des externen Spannsystems vorgespannt werden.

In einer weiteren bevorzugten Ausführungsform des Turmabschnitts eines Hybridturms ist vorgesehen, dass das mit dem Anker versehene untere Turmsegment das unterste Turmsegment ist, welches vorzugsweise zur Verbindung mit einem Turmfundament ausgebildet ist.

In einer bevorzugten Variante dieser Ausführungsform ist das mit dem Anker verbundene untere Turmsegment das unterste Turmsegment, das am Turmfundament befestigt ist.

In einer weiteren bevorzugten Ausführungsform des Turmabschnitts eines Hybridturms ist vorgesehen, dass das obere Turmsegment eine obere Turmsegment-Schubsperranordnung und/oder das untere Turmsegment eine untere Turmsegment-Schubsperranordnung umfasst, wobei die obere Turmsegment-Schubsperranordnung zum Eingriff in eine Konsolen-Schubsperranordnung und/oder zum Eingriff in die untere Turmsegment-Schubsperranordnung ausgebildet ist und/oder die untere Turmsegment-Schubsperranordnung zum Eingriff in eine Konsolen-Schubsperranordnung und/oder zum Eingriff in die obere Turmsegment-Schubsperranordnung ausgebildet ist.

Die obere Turmsegment-Schubsperranordnung ist vorzugsweise dazu ausgebildet, im Eingriff mit der unteren Turmsegment-Schubsperranordnung und/oder mit der Konsolen-Schubsperranordnung, radial und tangential wirkende Kräfte derart aufzunehmen, dass radiale und/oder tangentiale Relativbewegungen zwischen der ringförmigen Konsole und/oder einem unteren Turmsegment und/oder einem oberen Turmsegment verhindert werden.

Die untere Turmsegment-Schubsperranordnung ist vorzugsweise ausgebildet, im Eingriff mit der oberen Turmsegment-Schubsperranordnung und/oder mit der Konsolen-Schubsperranordnung, radial und/oder tangential wirkende Kräfte aufzunehmen. Dadurch können vorzugsweise radiale und/oder tangentiale Relativbewegungen zwischen der ringförmigen Konsole und/oder einem unteren Turmsegment und/oder einem oberen Turmsegment verhindert oder verringert werden.

Vorzugsweise umfasst die obere Turmsegment-Schubsperranordnung und/oder die untere Turmsegment-Schubsperranordnung eine Schubsperrausnehmung und/oder einen Schubsperrvorsprung. Bevorzugt kann die untere Turmsegment-Schubsperranordnung formschlüssig und/oder kraftschlüssig und/oder stoffschlüssig in Eingriff gebracht werden mit der Konsolen-Schubsperranordnung und/oder mit der oberen Turmsegment-Schubsperranordnung verbunden. Bevorzugt kann die obere Turmsegment-Schubsperranordnung formschlüssig und/oder kraftschlüssig und/oder stoffschlüssig in Eingriff gebracht werden mit der Konsolen-Schubsperranordnung und/oder mit der unteren Turmsegment-Schubsperranordnung.

Vorzugsweise ist die obere Turmsegment-Schubsperranordnung und/oder die untere Turmsegment-Schubsperranordnung als Wellenprofil und/oder Zahnprofil ausgebildet, wobei das Zahnprofil beispielsweise dreieckige oder rechteckige Zähne umfassen kann. Gemäß einem weiteren Aspekt der Erfindung wird die eingangs genannte Aufgabe gelöst durch einen Hybridturm, vorzugsweise einen Hybridturm für eine Windenergieanlage, umfassend einen zuvor beschriebenen Turmabschnitt.

Gemäß einem weiteren Aspekt der Erfindung wird die eingangs genannte Aufgabe gelöst durch eine Windenergieanlage umfassend einen zuvor beschriebenen Hybridturm.

Gemäß dem unabhängigen Anspruch 14, in einem weiteren Aspekt der Erfindung wird die eingangs genannte Aufgabe gelöst durch ein Montageverfahrens eines externen Spannsystems für einen Hybridturm, vorzugsweise für einen Hybridturm einer Windenergieanlage, umfassend Bereitstellen eines zuvor beschriebenen externen Spannsystems, Zusammenbau des externen Spannsystems, Anordnung einer ringförmigen Konsole mit einem Lagerelement des externen Spannsystems auf einem Absatz im inneren eines oberen Turmsegments und/oder Befestigung der ringförmigen Konsole mit dem Lagerelement des externen Spannsystems auf dem Absatz im inneren des oberen Turmsegments, Anordnung eines Spannelements mit einem Anschlusskopf des externen Spannsystems an einem Anschlusselement der ringförmigen Konsole und/oder Befestigung des Spannelements mit dem Anschlusskopf des externen Spannsystems an dem Anschlusselement der ringförmigen Konsole, Anordnung des Spannelements mittels eines Ankers des externen Spannsystems an einem unteren Turmsegment und/oder Befestigung des Spannelements mittels des Ankers des externen Spannsystems an dem unteren Turmsegment.

Das Montageverfahren des externen Spannsystems für einen Hybridturm ist bevorzugt sowohl für die Erstmontage als auch für die Nachrüstung bestehender Hybridtürme, das heißt für die nachträgliche Montage, geeignet. Der Zusammenbau des externen Spannsystems umfasst insbesondere bei einer mehrere Konsolensegmente umfassenden ringförmigen Konsole den Zusammenbau der Konsolensegmente zu der ringförmigen Konsole. In besonders bevorzugter Weise umfasst das Montageverfahren des externen Spannsystems den Zusammenbau der Konsolensegmente im Turminneren.

Zu den Vorteilen, Ausführungsvarianten und Ausführungsdetails dieser weiteren Aspekte der Erfindung und ihrer jeweiligen Fortbildungen wird auf die vorangegangene Beschreibung zu den entsprechenden Merkmalen der übrigen Aspekte verwiesen.

Bevorzugte Ausführungsformen der Erfindung werden beispielhaft anhand der beiliegenden Figuren erläutert. Es zeigen:
- Fig. 1:: eine schematische, dreidimensionale Ansicht einer beispielhaften Ausführungsform einer Windenergieanlage;
- Fig. 2:: eine dreidimensionale geschnittene Ansicht eines in einem Hybridturm angebrachten externen Spannsystems;
- Fig. 3:: eine dreidimensionale Ansicht eines Teils der ringförmigen Konsole des externen Spannsystems nach Fig. 2;
- Fig. 4:: eine weitere dreidimensionale Ansicht eines Teils der ringförmigen Konsole des externen Spannsystems nach Fig. 2 (Detail A);
- Fig. 5:: eine dreidimensionale Ansicht eines Ankers des externen Spannsystems nach Fig. 2 (Detail B);
- Fig. 6:: eine schematische Darstellung einer Ausführungsform einer ringförmigen Konsole mit Schubsperranordnung;
- Fig. 7:: einen Querschnitt eines Teils einer weiteren Ausführungsform einer ringförmigen Konsole;
- Fig. 8:: eine dreidimensionale Ansicht eines Konsolensegments einer weiteren Ausführungsform einer ringförmigen Konsole;
- Fig. 9:: eine dreidimensionale Teilansicht des Konsolensegments gemäß Figur 7;
- Fig. 10:: eine weitere dreidimensionale Teilansicht des Konsolensegments gemäß Figur 7;
- Fig. 11:: eine weitere dreidimensionale Teilansicht des Konsolensegments gemäß Figur 7;
- Fig. 12:: einen Teil einer nicht erfindungsgemäßen ringförmigen Konsole im Querschnitt;
- Fig. 13a:: einen Querschnitt durch eine weitere Ausführungsform einer ringförmigen Konsole;
- Fig. 13b:: eine vergrößerte Darstellung des Details A aus Figur 13a;
- Fig. 13c:: eine Draufsicht auf die ringförmige Konsole gemäß Figur 13a;
- Fig. 13d:: einen Querschnitt entlang der Schnittebene B-B aus Figur 13a;
- Fig. 13e:: einen Querschnitt entlang der Schnittebene A-A aus Figur 13c,d;
- Fig. 13f:: eine Ansicht in Richtung Y aus Figur 13c;
- Fig. 13g:: eine vergrößerte Darstellung des Details eines Anschlusselements gemäß Figur 13c;
- Fig. 13h:: eine Ansicht in Richtung Z aus Figur 13d;
- Fig. 13i:: eine Detailansicht eines inneren Steges;
- Fig. 13j:: eine Detailansicht einer Steife; und
- Fig. 13k:: die Steife aus Figur 13i im Einbauzustand.

In den Figuren sind gleiche oder im Wesentlichen funktionsgleiche bzw. -ähnliche Elemente mit den gleichen Bezugszeichen bezeichnet.

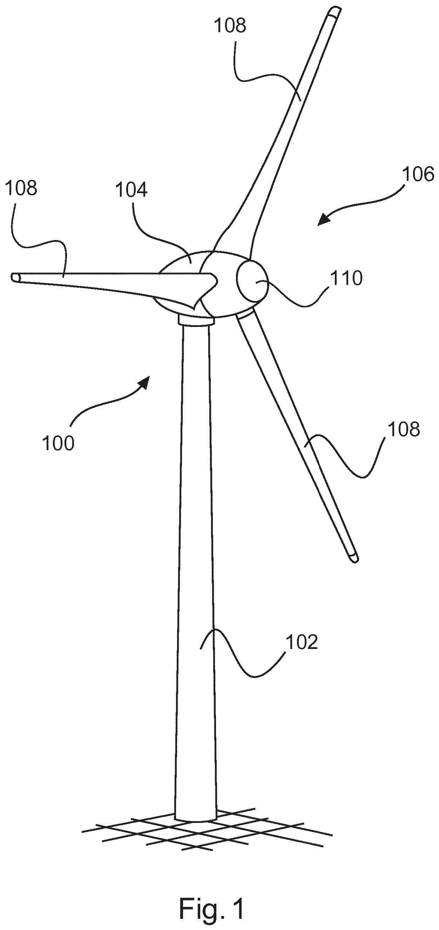

Fig. 1 zeigt eine schematische, dreidimensionale Ansicht einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 108b der jeweiligen Rotorblätter 108 verändert werden. Der Turm 102 der Windenergieanlage 100 weist eine ringförmige Konsole als Teil eines externen Spannsystems wie hierin beschrieben auf.

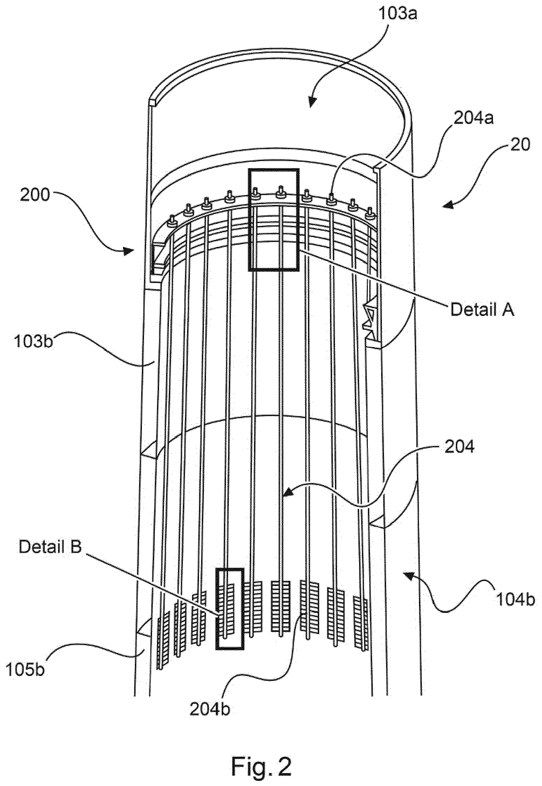

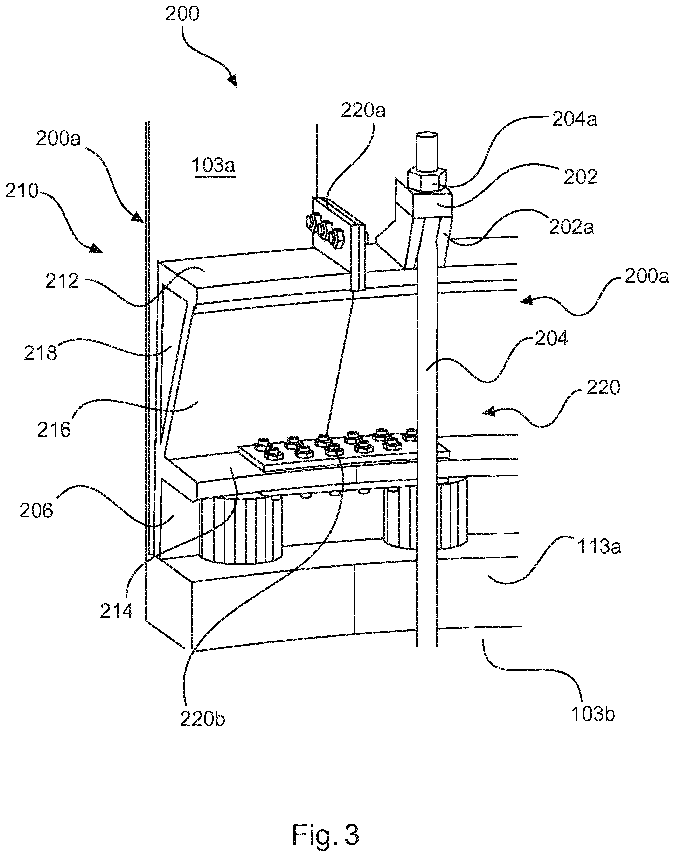

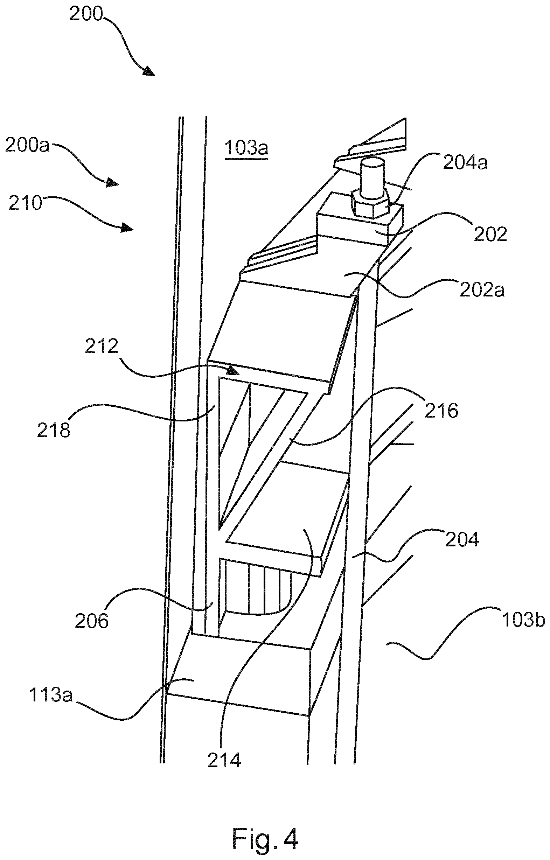

Fig. 2 zeigt einen Turmabschnitt eines Turms mit einem oberen Turmsegment 103a und mehreren in Längsrichtung darunter angeordneten unteren Turmsegmenten 103b, 104b, 105b, die mit einem externen Spannsystem 20 im Wesentlichen in Längsrichtung verspannt sind. Das externe Spannsystem 20 weist eine ringförmige Konsole 200 auf, die in den Figuren 3 und 4 noch näher dargestellt ist. An der ringförmigen Konsole 200 sind Spannelemente 204 mit Anschlussköpfen 204a an einem ersten Ende zum Übertragen einer Spannkraft die ringförmige Konsole 200 und einem Anker 204b zum Übertragen der Spannkraft auf ein unteres Turmsegment, hier das Turmsegment 105b.

Wie genauer auch in den Figuren 3 und 4 zu erkennen ist, ist die ringförmige Konsole 200 des externen Spannsystems 20 auf der Oberseite eines nach innen gerichteten Absatzes 113a des oberen Turmsegments 103a angeordnet und/oder befestigt. Mit der Unterseite des nach innen gerichteten Absatzes 113a des oberen Turmsegments 103a ist das obere Turmsegment 103a auf dem unteren Turmsegment 103b angeordnet. In der in Figur 2 gezeigten Ausführungsvariante ist das dritte unterhalb des oberen Turmsegments 103a angeordnete untere Turmsegment 105b über die Anker 204b mit den Spannelementen 204 verbunden und spannt so die weiteren Turmsegmenten 103b, 104b vor. Das obere Turmsegment 103a ist aus Stahl ausgebildet. Die unteren Turmsegmente 103b, 104b, 105b umfassen Beton, bevorzugt Spannbeton und/oder Stahlbeton.

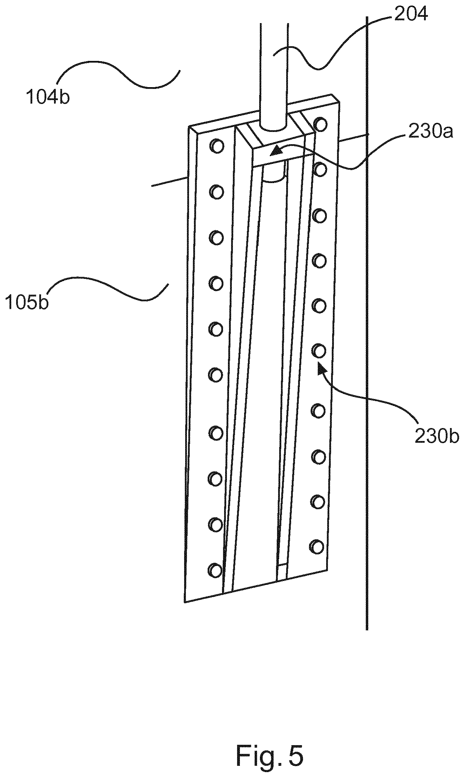

Die Spannelemente 204 sind am ersten, oberen Ende über Anschlussköpfe 204a mit Anschlusselementen 202 des externen Spannsystems 20 verbunden. Ein Anschlusskopf 204a eines Spannelements 204 umfasst beispielsweise eine Schraubverbindung aus Gewindestange und Mutter. Am zweiten, unteren Ende sind die Spannelemente 204 über Anker 204b mit dem unteren Turmsegment 105b bzw. dessen Innenwand verbunden, wie insbesondere auch in Figur 5 zu erkennen ist. Bei der gezeigten Ausführungsvariante bildet das Spannelement 204 an seinem unteren Ende im Bereich des Ankers 204b eine Gewindestange aus, die mit einer an der Innenwand des Turmsegments 105b befestigten Stahlschiene 230a,b verschraubt ist. Vorzugsweise ist die Stahlschiene 230a,b mit dem Turmsegment 105b verschraubt oder beispielsweise mittels Durchsteckanker an dem Turmsegment 105b befestigt. Spannelemente 204 können ergänzend und/oder alternativ an einem beliebigen anderen unteren Turmsegment und/oder dem Fundament des Turms 102 befestigt sein. In der in Fig. 2 dargestellten Ausführungsvariante sind die Spannelemente 204 im Wesentlichen parallel zur Innenwand der unteren Turmsegmente im Turminneren angeordnet.

Zum Verspannen werden die Spannelemente 204 beispielsweise mittels der auf das Gewinde aufgeschraubten und auf der Oberseite des Anschlusselements 202 anliegenden Mutter verspannt. Die im Spannelement herrschende Spannkraft lässt sich beispielsweise mittels eines Drehmomentschlüssels einstellen. Über den Anschlusskopf 204a und den Anker 204b des Spannelements 204 wird die Spannkraft in das obere Turmsegment 103a und das Turmsegment 105b oder das Fundament geleitet und verspannt die dazwischen angeordneten unteren Turmsegmente 103b, 104b.

Die Spannelemente 204 und jeweils zugehörigen Anschlusselemente 202 sind in Umfangsrichtung äquidistant zueinander angeordnet.

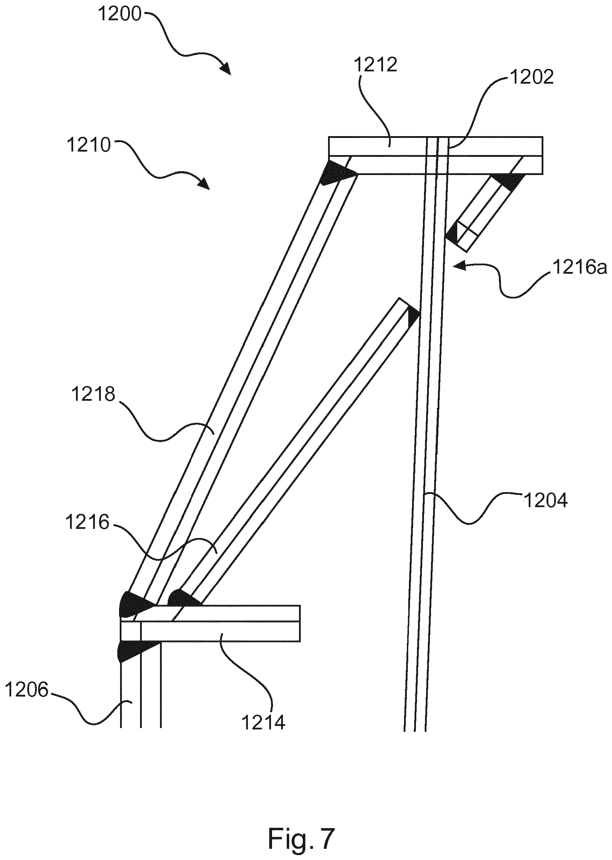

Wie insbesondere auch in Figur 3 zu erkennen ist, kann die ringförmige Konsole 200 mehrere Konsolensegmenten 200a umfassen. Fig. 7 zeigt einen Querschnitt eines Teils einer weiteren Ausführungsform einer ringförmigen Konsole 1200. Beide ringförmigen Konsolen 200, 1200 weisen ein ringförmiges Kraftübertragungselement 210, 1210 auf, das einen oberen Gurt 212, 1212, einen unteren Gurt 214, 1214, einen inneren Steg 216, 1216 und einen äußeren Steg 218, 1218 mit einem Anschlusselement 202, 1202 und einem Lagerelement 206, 1206 umfasst.

In beiden Varianten der Fig. 3 und 7 ist der obere Gurt 212, 1212 an seinem inneren Ende mit dem inneren oberen Ende des inneren Stegs 216, 1216 verbunden. Ferner ist der obere Gurt 212, 1212 an seinem äußeren Ende mit dem oberen Ende des äußeren Stegs 218, 1218 verbunden. Der innere Steg 216, 1216 ist mit seinem unteren äußeren Ende mit dem unteren Ende des äußeren Stegs 218, 1218 verbunden. Insbesondere ist das untere äußere Ende des inneren Stegs 216, 1216 im Bereich der unteren Hälfte der Erstreckungsebene in Längsrichtung des äußeren Stegs 218, 1218 verbunden. Ferner ist das untere äußere Ende des inneren Stegs 216, 1216 mit dem äußeren Ende des unteren Gurts 214, 1214 verbunden. Vorzugsweise sind der obere Gurt 212, 1212 und/oder der innere Steg 216, 1216 und/oder der äußere Steg 218, 1218 und/oder der untere Gurt 214, 1214 stoffschlüssig miteinander verbunden.

Der obere Gurt 212, 1212, der untere Gurt 214, 1214, der innere Steg 216, 1216, der äußere Steg 218, 1218 und das Lagerelement 206, 1206 weisen jeweils eine flächige Erstreckung in einer Erstreckungsebene auf. Der obere Gurt 212, 1212 und der untere Gurt 214, 1214 weisen eine ebene Erstreckungsebene auf, die horizontal ausgerichtet ist. Die Erstreckungsebene des oberen Gurts 212, 1212 und des unteren Gurts 214, 1214 sind im Wesentlichen parallel.

Die Erstreckungsebenen des Lagerelements 206, 1206 sowie des inneren Stegs 216, 1216 und des äußeren Stegs 218, 1218 sind gekrümmt in einer Ausrichtung in Umfangsrichtung und koaxial zueinander angeordnet. Die Erstreckungsebene des Lagerelements 206, 1206 verläuft im wesentlichen parallel zu Längsachse.

In Fig. 3 verläuft auch die Erstreckungsebene des äußeren Stegs 218 im wesentlichen parallel zur Längsachse, wohingegen die Erstreckungsebene des inneren Stegs 216 geneigt zur Längsachse verläuft. In Fig. 7 verlaufen die Erstreckungsebenen des inneren Stegs 1216 und des äußeren Stegs 1218 geneigt zur Längsachse.

Der obere Gurt 212, 1212 und der untere Gurt 214, 1214 und das Lagerelement 206, 1206 weisen eine Haupterstreckungsrichtung in Umfangsrichtung auf. Der innere Steg 216, 1216 und der äußere Steg 218, 1218 weisen in Fig. 3 und 7 ebenfalls eine Haupterstreckungsrichtung in Umfangsrichtung auf und sind als ringförmige Stege ausgebildet.

Die Erstreckung des oberen Gurts 212, 1212 und des unteren Gurts 214, 1214 in der Erstreckungsebene in Haupterstreckungsrichtung ist um ein Vielfaches größer als eine Erstreckung des oberen Gurts 212, 1212 und des unteren Gurts 214, 1214 in der Erstreckungsebene orthogonal zur Haupterstreckungsrichtung in radialer Richtung.

Die Erstreckung des Lagerelements 206, 1206 in der Erstreckungsebene in Haupterstreckungsrichtung ist um ein Vielfaches größer als eine des Lagerelements 206, 1206 in der Erstreckungsebene orthogonal zur Haupterstreckungsrichtung in Längsrichtung.

In Fig. 2 und 3 erstreckt sich der innere Steg 216, 1216 von einem inneren Ende des oberen Gurts 212, 1212 zu einem äußeren Ende des unteren Gurts 214, 1214. Der äußere Steg 218, 1218 erstreckt sich von einem äußeren Ende des oberen Gurts 212, 1212 zu einem äußeren Ende des unteren Gurts 214, 1214.

Gemäß Fig. 7 weist der innere Steg 1216 eine Durchgangsöffnung 1216a zur Durchführung des Spannelements 1204 auf.

Gemäß Figur 3 ist der innere Steg 216 gegenüber der Innenwand des oberen Turmsegments 103a und/oder der Längsachse mit einem spitzen Winkel als Neigungswinkel angeordnet. In Fig. 3 ist der äußere Steg zu 218 mit seiner flächigen Erstreckung in einer Erstreckungsebene im Wesentlichen parallel zur Längsachse angeordnet und/oder im Wesentlichen parallel zur Innenwand des oberen Turmsegments 103a angeordnet. In Fig. 7 ist der äußere Steg 1218 mit seiner flächigen Erstreckung in einer Erstreckungsebene im Wesentlichen nicht parallel zur Längsachse angeordnet und/oder im Wesentlichen nicht parallel zur Innenwand des oberen Turmsegments im Einbauzustand angeordnet.

Fig. 3 und 7 zeigen ferner ein sich im Wesentlichen in Längsrichtung erstreckendes Lagerelement 206, 1206, welches mit seinem oberen Ende in Umfangsrichtung mit dem äußeren Ende des unteren Gurts 214, 1214 verbunden ist. Ferner bildet in Fig. 3 ein in Längsrichtung über den unteren Gurt 214 nach unten hinausgehender Fortsatz des äußeren Stegs 218 das Lagerelement 206 aus.

Fig. 3 zeigt eine ringförmige Konsole 200, die zum Zweck des Transports und/oder der Montage mehrere Konsolensegmente 200a umfasst. Die Konsolensegmente 200a sind mit einer Verbindungsanordnung 220 miteinander verbunden. Die Verbindungsanordnung 220 umfasst ein erstes Befestigungselement 220a und ein zweites Befestigungselement 220b. Das erste Befestigungselement 220a ist ein Druckstempel, der in Umfangsrichtung stirnseitig an dem Konsolensegment 200a angeordnet ist und in radialer Richtung sowie in Längsrichtung einen Flansch ausbildet. Vorzugsweise ist der Druckstempel 220a mit dem oberen Gurt 212, bevorzugt stoffschlüssig, verbunden. Das zweite Befestigungselement 220b ist vorzugsweise eine Scher-Lochleibungsverbindung, die in Umfangsrichtung an dem Konsolensegment 200a angeordnet ist und sich im Wesentlichen in Umfangsrichtung erstreckt. Vorzugsweise ist die Scher-Lochleibungsverbindung 220b mit dem unteren Gurt 214, bevorzugt lösbar, beispielsweise mittels einer Schraubverbindung, verbunden.

Fig. 3 zeigt ferner ein Anschlusselement 202, das an dem oberen Gurt 212 auf dessen Oberseite angeordnet über ein Anschlussstück 220a am oberen Gurt 212 befestigt ist. Als Anschlusselement 202 wird in der vorliegenden Beschreibung insbesondere die Position (wie beispielsweise eine Durchgangsöffnung) an einem etwaig größeren Gesamtelement verstanden, an welcher das Spannelement angeschlossen wird.

Das Anschlusselement 202 ist mit einem Abstand zu Längsachse derart angeordnet, dass der Abstand kleiner ist als der Innenradius des oberen Gurts 212 und/oder der inneren Kante des nach innen gerichteten Absatzes 113a des oberen Turmsegments 103a und/oder der inneren Kante des unteren Turmsegments 103b.

Fig. 7 zeigt ein Anschlusselement 1202 das an den oberen Gurt 1212 angeordnet ist und eine im wesentlichen in Längsrichtung ausgebildete Durchgangsöffnung für ein Spannelement 1204 aufweist, das mit seinem Anschlusskopf 1204a in der Durchgangsöffnung des Anschlusselements 1202 angeordnet und/oder befestigt werden kann. Die Durchgangsöffnung des Anschlusselements 1202 für das Spannelement 1204 ist mit einem Abstand radial zu der ringförmigen Konsole 1200 derart angeordnet, dass dieser kleiner ist als der Innenradius der Innenkante des oberen und/oder unteren Turmsegments, jedoch zwischen dem Außenradius und dem Innenradius des oberen Gurts 1212 liegt.

Die Durchgangsöffnung des inneren Stegs 1216 für das Spannelement 1204 ist mit einem Abstand radial zu der ringförmigen Konsole 1200 derart angeordnet, dass dieser kleiner ist als der kleinste Innenradius des oberen und/oder unteren Turmsegments, jedoch zwischen dem Außenradius und dem Innenradius des inneren Stegs 1216 liegt.

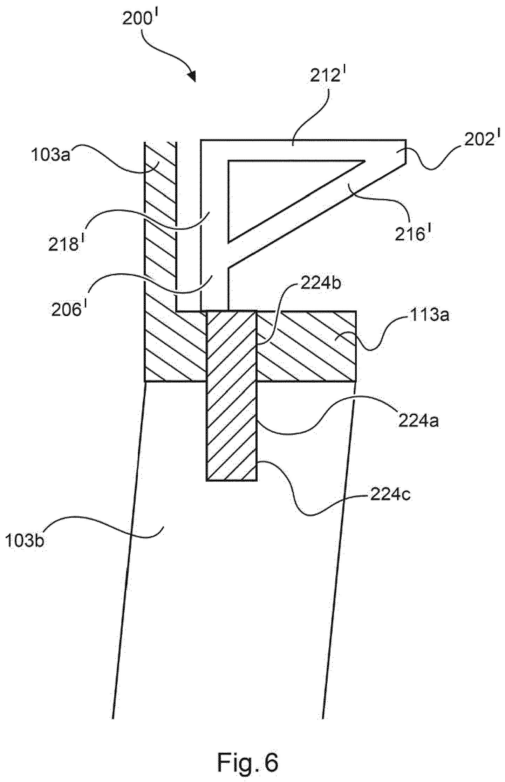

In Figur 6 ist eine Ausgestaltung einer Ausführungsform einer ringförmigen Konsole 200' dargestellt, die ähnlich ist zu der in den Figuren 3 und 4 gezeigten Ringkonsole 200. Die Ringkonsole 200' weist einen oberen Gurt 212', ein Anschlusselement 202', einen äußeren Steg 218`, einen inneren Steg 216` und ein Lagerelement 206` auf. Anders als die in den Figuren 3 und 4 dargestellte Ringkonsole 200 weist die Ringkonsole 200' gemäß Figur 6 jedoch keinen unteren Gurt auf. Die in Figur 6 dargestellte Ringkonsole 200' zeigt jedoch eine Schubsperranordnung. Hierbei bildet die ringförmige Konsole 200' in Längsrichtung im Bereich des Lagerelements 206` Schubdorne 224a als Konsolen-Schubsperranordnung aus. Die Turmsegment-Schubsperranordnung des oberen Turmsegments 103a ist als Durchgangsöffnung 224b ausgebildet und die Turmsegment-Schubsperranordnung des unteren Turmsegments 103b ist als Sacklochbohrung 224c ausgebildet, die jeweils den Schubdorn 224a der Konsolen-Schubsperranordnung aufnehmen. Mittels der Schubsperranordnung wird eine Anordnung des unteren Turmsegments 103b, des oberen Turmsegments 103a und der ringförmigen Konsole 200' mit einer definierten Winkelposition zueinander sichergestellt. Die Schubsperranordnung verhindert oder vermindert ferner Relativbewegungen in radialer und/oder tangentiale Richtung zwischen dem unteren Turmsegment 103b und/oder dem oberen Turmsegment 103a und/oder der ringförmigen Konsole 200`.

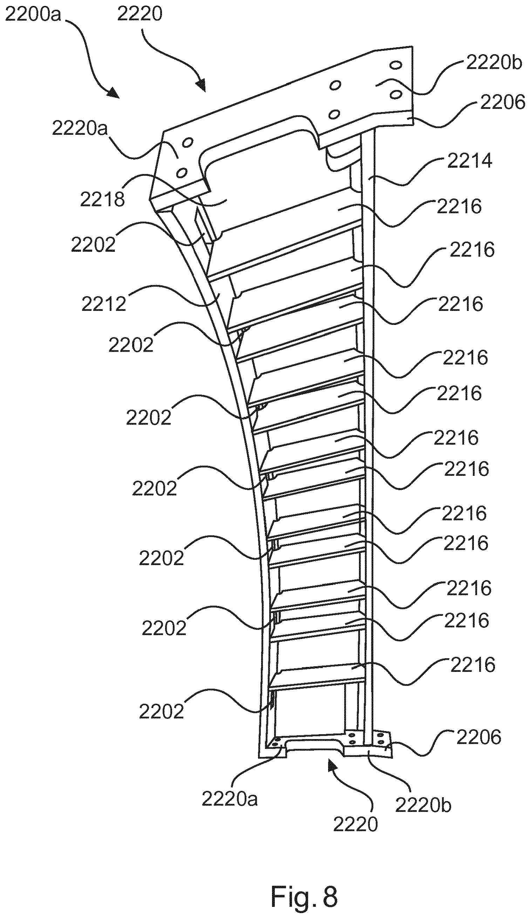

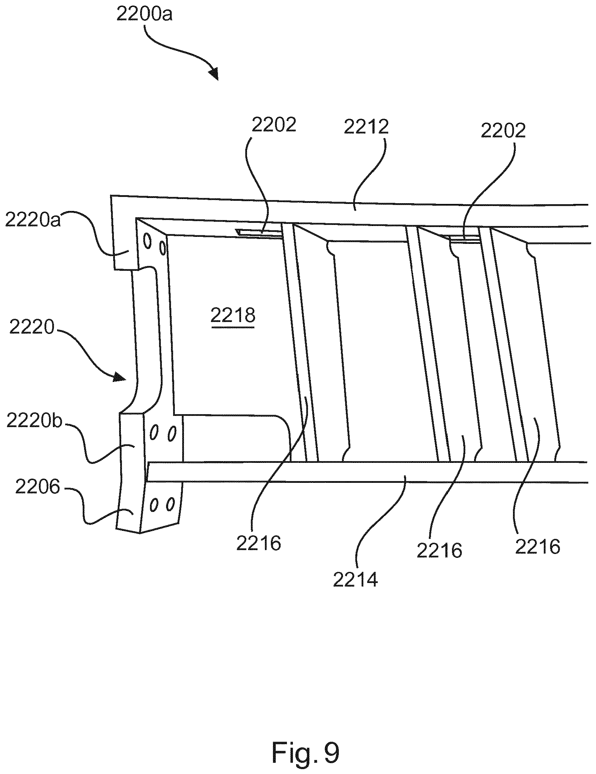

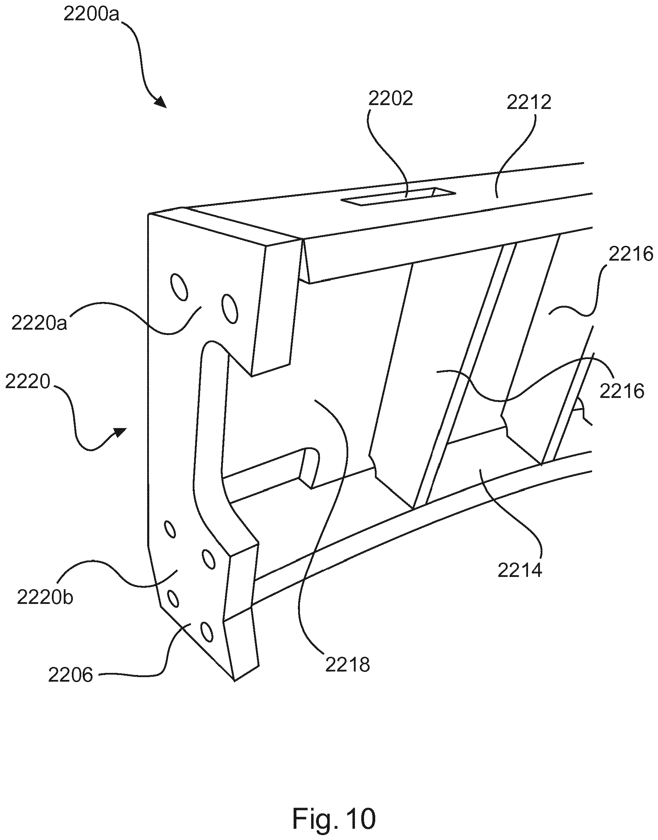

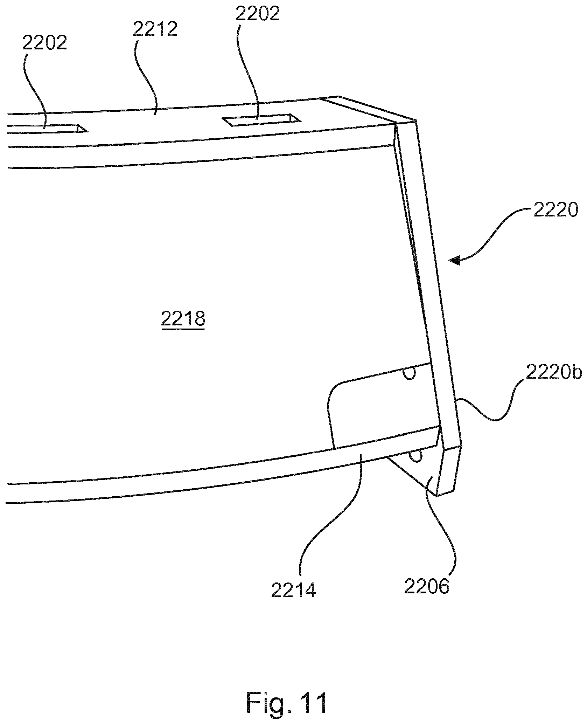

Fig. 8 zeigt eine dreidimensionale Ansicht eines Konsolensegments 2200a einer weiteren Ausführungsform einer ringförmigen Konsole und die Figuren 9 bis 11 weitere dreidimensionale Teilansichten hiervon. Mehrere der in Figur 8 gezeigten Konsolensegmente 2200a können zu einer ringförmigen Konsole zusammengesetzt werden.

Das Konsolensegment 2200a weist einen oberen Gurt 2212 mit Anschlusselementen 2202 in Form von Ausnehmungen auf, einen unteren Gurt 2214, und einen äußeren Steg 2218 sowie ein Lagerelement 2206. Anders als in den vorherigen Ausführungsformen, weist das Konsolensegment 2200a eine Mehrzahl von inneren Stegen 2216 auf.

Vorzugsweise sind der obere Gurt 2212, die inneren Stege 2216, der äußere Steg 2218 und der untere Gurt 2214 stoffschlüssig miteinander verbunden.

Der obere Gurt 2212 und/oder der untere Gurt 2214 weisen im Wesentlichen eine horizontale, im Wesentlichen orthogonal zur Längsachse angeordnete flächige Erstreckung in einer jeweiligen Erstreckungsebene auf. Der innere Steg 2216 weist eine im Wesentlichen parallel zur Längsachse LA der ringförmigen Konsole 2200 und radial dazu angeordnete flächige Erstreckung in einer der jeweiligen Erstreckungsebenen auf. Der äußere Steg 2218 ist bevorzugt mit seiner flächigen Erstreckung in einer Erstreckungsebene im Wesentlichen parallel zur Längsachse angeordnet und/oder im Wesentlichen parallel zur Innenwand des oberen Turmsegments 103a angeordnet.

Bevorzugt sind die inneren Stege 2216 in Umfangsrichtung äquidistant zueinander angeordnet. Vorzugsweise sind die inneren Stege 2216 im Bereich der Einleitung der Spannkraft, d.h. im Bereich der Anschlusselemente 2202, angeordnet. Besonders bevorzugt ist der innere Steg quer zu Umfangsrichtung, d.h. in tangentialer Richtung, an das Anschlusselement 2202 angrenzend zwischen der Unterseite des oberen Gurts 2212 und der Oberseite des unteren Gurts 2214 angeordnet.

Das Konsolensegment 2200a weist an seiner Stirnseite in Umfangsrichtung eine Verbindungsanordnung 2220 auf, umfassend ein erstes Befestigungselement 2220a, das an der Stirnseite des oberen Gurts 2212 und/oder an einem oberen Abschnitt der Stirnseite des äußeren Stegs 2218 und ein zweites Befestigungselement 2220b, das an der Stirnseite des unteren Gurts 2214 und/oder an einem unteren Abschnitt der Stirnseite des äußeren Stegs 2218 angeordnet ist. Bevorzugt umfasst die Verbindungsanordnung 2220 das erste Befestigungselement 2220a und das zweite Befestigungselement 2220b als Flansch zur stirnseitigen Verbindung eines weiteren Konsolensegments 2220a in Umfangsrichtung.

Das Lagerelement 2206 des Konsolensegments 2200a ist kein in Umfangsrichtung kontinuierliches Lagerelement, wie in den anderen Ausführungsformen gezeigt. Vielmehr weist eine ringförmige Konsole, die aus mehreren Konsolensegmenten 2200a zusammengesetzt ist, mehrere Lagerelemente 2206 auf, die in Umfangsrichtung voneinander beabstandet sind. Die Lagerelemente 2206 erstrecken sich in ihrer Haupterstreckungsrichtung im Wesentlichen in radialer Richtung, wobei das Lagerelement 2206 im Wesentlichen quer zu Umfangsrichtung auf der Unterseite des unteren Gurts 2214 angeordnet ist. Vorzugsweise ist das Lagerelement 2206 integral mit dem zweiten Befestigungselement 2220b ausgebildet. Ferner vorzugsweise ist der sich in Längsrichtung über den unteren Gurt 2214 hinaus nach unten erstreckende Fortsatz des zweiten Befestigungselement 2220b das Lagerelement 2206. Vorzugsweise sind die Lagerelemente 2206 in Umfangsrichtung äquidistant zueinander angeordnet. Ferner bevorzugt sind die Lagerelemente 2206 in Umfangsrichtung im Bereich der Einleitung der Spannkraft, d.h. der Anschlusselemente 2202, angeordnet. Sofern das Lagerelement 2206 mit dem zweiten Befestigungselement 2220b und/oder das zweite Befestigungselement 2220b auch als Lagerelement ausgebildet ist, weist die ringförmige Konsole bevorzugt im Bereich der jeweiligen Verbindungsanordnung 2220 Lagerelemente 2206 auf.

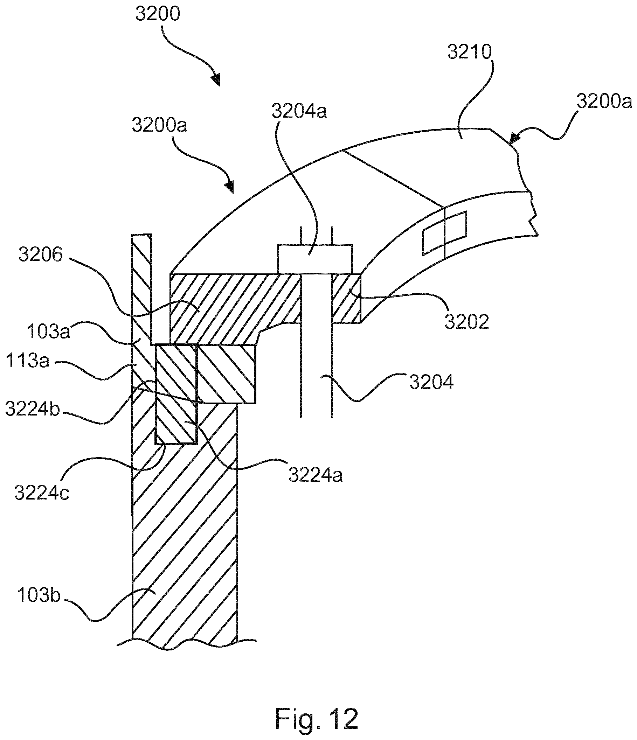

Fig. 12 zeigt eine auf der Oberseite des nach innen gerichteten Absatzes 113a des oberen Turmsegments 103a angeordnete nicht erfindungsgemäße ringförmige Konsole 3200, die vorzugsweise Spannbeton und/oder Stahlbeton umfasst. Aus Transport- und/oder Montagegründen umfasst die ringförmige Konsole 3200 mehrere Konsolensegmente 3200a. Die Konsolensegmente 3200a sind bevorzugt form- und/oder kraftschlüssig, beispielsweise mit einer Steck- und/oder Schraubverbindung, miteinander verbunden.

Die in Fig. 12 gezeigte Ausführungsvariante einer ringförmigen Konsole 3200 bzw. der Konsolensegmente 3200a umfasst integral sowohl ein Anschlusselement 3202 als auch ein Lagerelement 3206. Das Anschlusselement 3202 ist als im Wesentlichen in Längsrichtung zur Längsachse angeordnete Durchgangsöffnung zur Aufnahme eines Spannelements 3204 ausgebildet, wobei das Anschlusselement 3202 mit einem Abstand zu Längsachse beabstandet angeordnet ist, der größer ist als der Innenradius der ringförmigen Konsole 3200 und kleiner ist als der Innenradius der inneren Kante des nach innen gerichteten Absatzes 113a des oberen Turmsegments 103a und/oder des unteren Turmsegments 103b. Das Lagerelement 3206 ist als Stufe und/oder Vorsprung vorzugsweise integral an der ringförmigen Konsole 3200 bzw. den Konsolensegmenten 3200a, im Wesentlichen in Längsrichtung, ausgebildet. Ferner erstreckt sich das Lagerelement 3206 in Umfangsrichtung im Wesentlichen durchgehend. Vorzugsweise erstreckt sich das Lagerelement 3206 in radialer Richtung in der äußeren Hälfte und besonders bevorzugt im äußeren Drittel der ringförmigen Konsole 3200 bzw. der Konsolensegmente 3200a.

Fig. 12 zeigt ergänzend eine Schubsperranordnung. Hierbei bildet die ringförmige Konsole 3200 in Längsrichtung im Bereich des Lagerelements 3206 Schubdorne 3224a als Konsolen-Schubsperranordnung aus. Die Turmsegment-Schubsperranordnung des oberen Turmsegments 103a ist als Durchgangsöffnung 3224b ausgebildet und die Turmsegment-Schubsperranordnung des unteren Turmsegments 103b ist als Sacklochbohrung 3224c ausgebildet, die jeweils den Schubdorn 3224a der Konsolen-Schubsperranordnung aufnehmen. Mittels der Schubsperranordnung wird eine Anordnung des unteren Turmsegments 103b, des oberen Turmsegments 103a und der ringförmigen Konsole 3200 mit einer definierten Winkelposition zueinander sichergestellt. Die Schubsperranordnung verhindert oder vermindert ferner Relativbewegungen in radialer und/oder tangentiale Richtung zwischen dem unteren Turmsegment 103b und/oder dem oberen Turmsegment 103a und/oder der ringförmigen Konsole 3200.

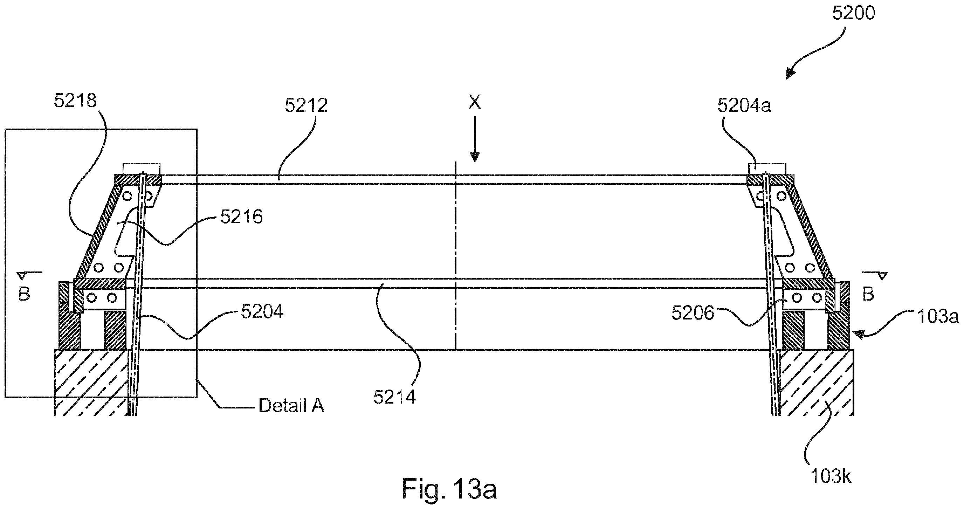

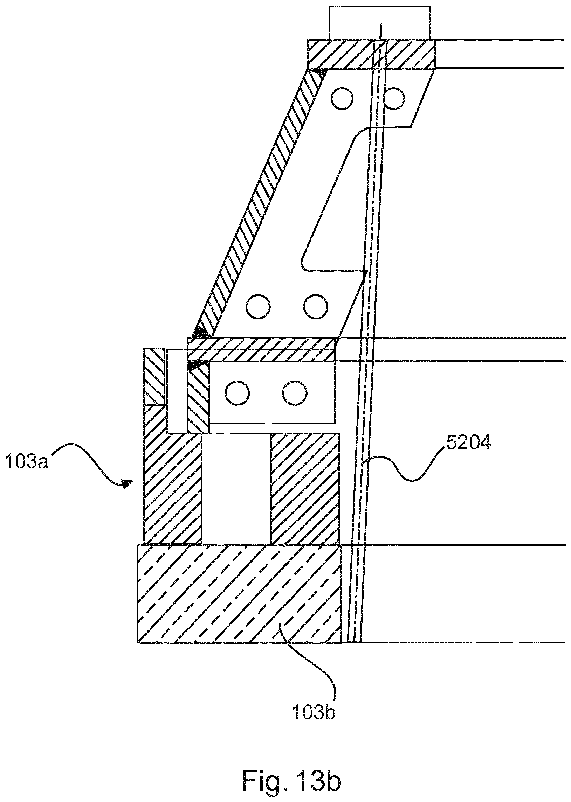

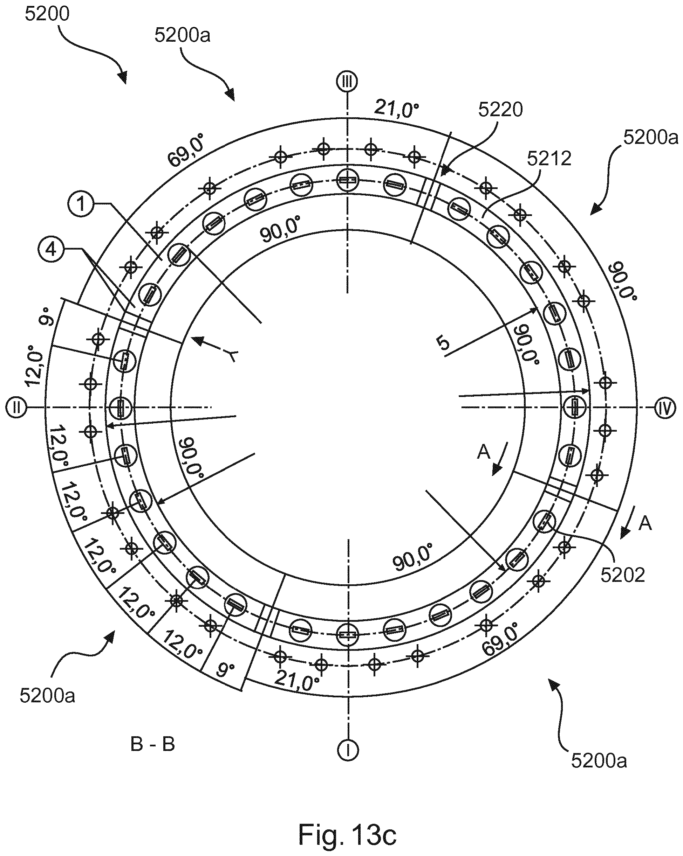

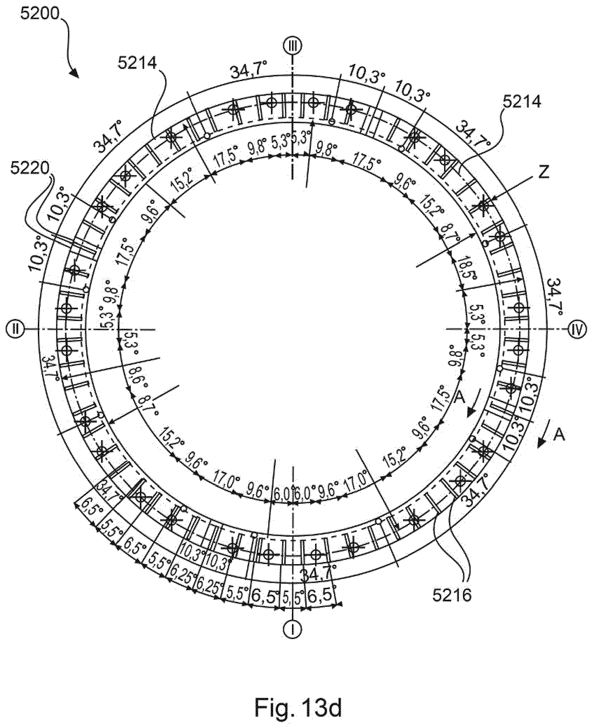

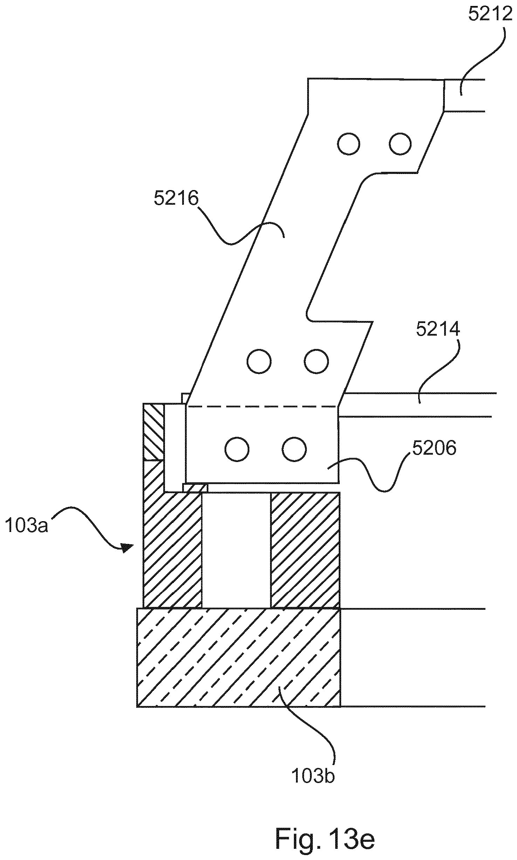

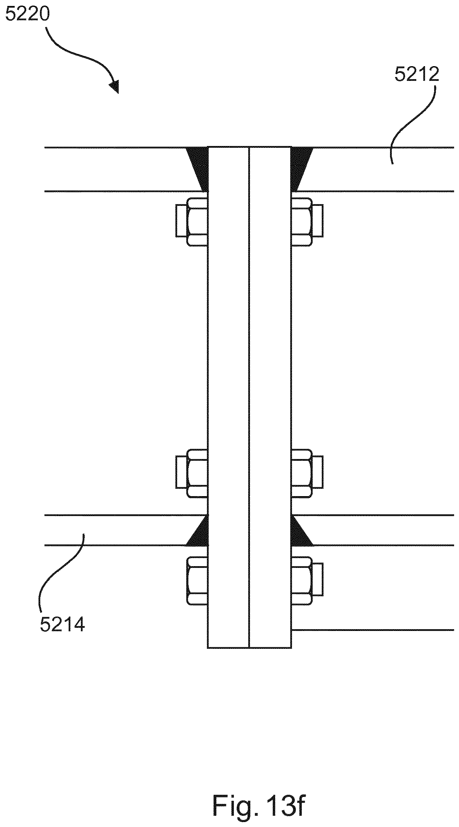

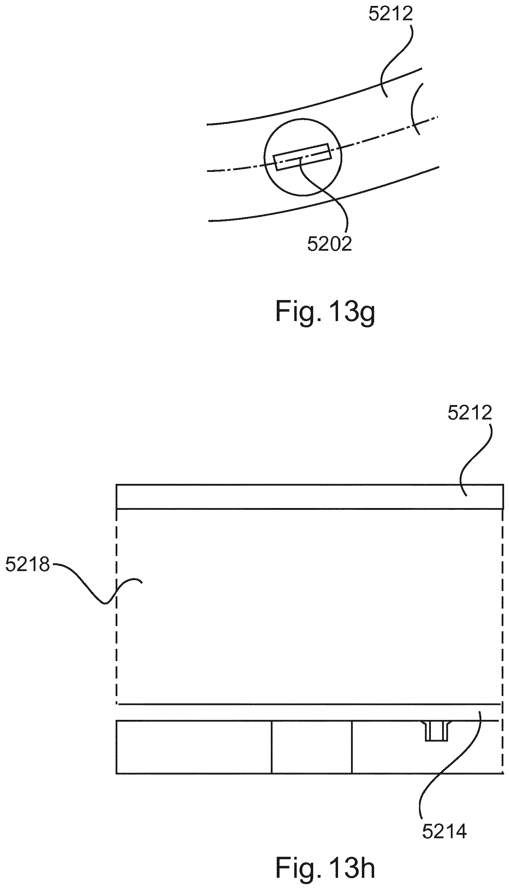

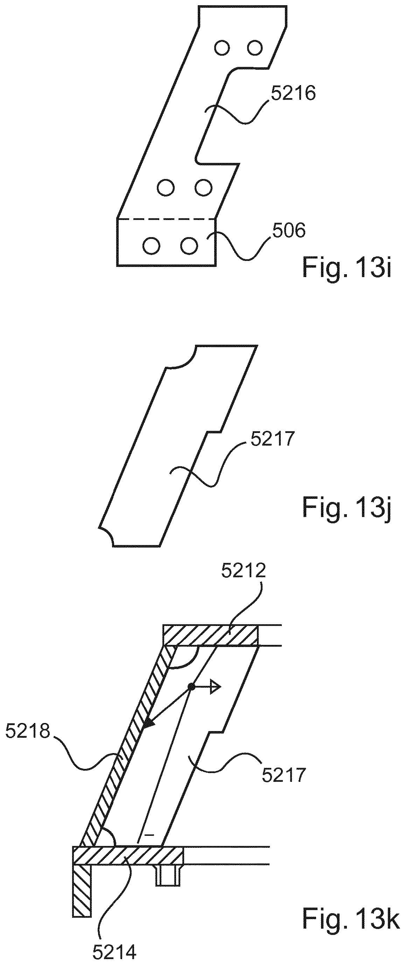

In den Figuren 13a bis 13k ist eine weitere Ausführungsform einer ringförmigen Konsole 5200 mit vier Konsolensegmenten 5200a dargestellt. Die ringförmige Konsole 5200 weist einen oberen Gurt 5212 mit Anschlusselementen 5202 in Form von Ausnehmungen auf, einen unteren Gurt 5214, und einen äußeren Steg 5218 sowie mehrere Lagerelemente 5206. Die Anschlusselements 5202 sind als im Wesentlichen in Längsrichtung zur Längsachse angeordnete Durchgangsöffnungen zur Aufnahme von Spannelementen 5204 ausgebildet.

Wie auch das Ausführungsbeispiel gemäß Figur 8 weist die ringförmige Konsole 5200 eine Mehrzahl von inneren Stegen 5216 auf. Diese inneren Stege 5216 sind vorzugsweise durch Steifen 5217 zusätzlich verstärkt.

Vorzugsweise sind der obere Gurt 5212, die inneren Stege 5216, der äußere Steg 5218 und der untere Gurt 5214 stoffschlüssig miteinander verbunden, Beispiel Weise durch Schweißen.

Der obere Gurt 5212 und der untere Gurt 5214 weisen im Wesentlichen eine horizontale, im Wesentlichen orthogonal zur Längsachse angeordnete flächige Erstreckung in einer jeweiligen Erstreckungsebene auf. Der innere Steg 5216 weist eine im Wesentlichen parallel zur Längsachse LA der ringförmigen Konsole 5200 und radial dazu angeordnete flächige Erstreckung in einer der jeweiligen Erstreckungsebenen auf. Der äußere Steg 5218 ist bevorzugt mit seiner flächigen Erstreckung in einer Erstreckungsebene im Wesentlichen parallel zur Längsachse angeordnet und/oder im Wesentlichen parallel zur Innenwand des oberen Turmsegments 103a angeordnet.

Die ringförmige Konsole 5200 weist an mehrere Verbindungsanordnungen 5220 auf, die dazu dienen, die Konsolensegmente 5200a miteinander zur ringförmigen Konsole 5200 zu verbinden.

Die Lagerelemente 5206 der ringförmigen Konsole 5200 erstrecken sich in ihrer Haupterstreckungsrichtung im Wesentlichen in radialer Richtung, wobei die Lagerelemente 5206 im Wesentlichen quer zu Umfangsrichtung auf der Unterseite des unteren Gurts 5214 angeordnet sind.

## Patentansprüche

1. Ringförmige Konsole (200) zum externen Spannen eines Turmsegments (103b), insbesondere eines Turmsegments (103b) einer Windenergieanlage, mit
- einem Anschlusselement (202) zum Anschließen eines Spannelements (204),
- einem Lagerelement (206) zur Übertragung einer Spannkraft auf das Turmsegment (103b), und
- einem ringförmigen Kraftübertragungselement (210) zur Übertragung der Spannkraft zwischen dem Anschlusselement (202) und dem Lagerelement (206), wobei
- das Lagerelement (206) in radialer Richtung einen größeren Abstand zu einer Längsachse (LA) der ringförmigen Konsole (200) aufweist als das Anschlusselement (202), wobei
- in radialer Richtung der Abstand (A2) des Lagerelements (206) zur Längsachse (LA) kleiner ist zu einem Außenradius des Turmsegments (103b) (100) und größer ist als ein Innenradius des Turmsegments (103b), **dadurch gekennzeichnet, dass** das Lagerelement (206) in radialer Richtung eine Erstreckung von maximal 50% einer Wandstärke des Turmsegments (103b) aufweist.

2. Ringförmige Konsole (200) nach Anspruch 1,
**dadurch gekennzeichnet, dass** in radialer Richtung der Abstand (A1) des Anschlusselements (202) zur Längsachse (LA) kleiner oder gleich ist als ein Innenradius des Turmsegments (103b).

3. Ringförmige Konsole (200) nach mindestens einem der vorherigen Ansprüche, **dadurch gekennzeichnet, dass** das ringförmige Kraftübertragungselement (210) einen oberen Gurt (212) und/oder einen unteren Gurt (214) aufweist.

4. Ringförmige Konsole (200) nach mindestens einem der vorherigen Ansprüche, **dadurch gekennzeichnet, dass** das ringförmige Kraftübertragungselement (210) einen inneren Steg (216) und/oder einen äußeren Steg (218) aufweist.

5. Ringförmige Konsole (200) nach einem der Ansprüche 3 oder 4,
**dadurch gekennzeichnet, dass** der innere Steg (216) eine Durchgangsöffnung zur Durchführung des Spannelements (204) aufweist und/oder der äußere Steg (218) eine Durchgangsöffnung zur Durchführung des Spannelements (204) aufweist und/oder der obere Gurt (212) eine Durchgangsöffnung zur Durchführung des Spannelements (204) aufweist und/oder der untere Gurt (214) eine Durchgangsöffnung zur Durchführung des Spannelements (204) aufweist.

6. Ringförmige Konsole nach einem der vorherigen Ansprüche,
**dadurch gekennzeichnet, dass** das ringförmige Kraftübertragungselement (210) eine ausgebildete Konsolen-Schubsperranordnung (224a) zum Eingriff in eine obere und/oder untere Turmsegment- Schubsperranordnung (224b, 224c) umfasst.

7. Ringförmige Konsole nach einem der vorherigen Ansprüche,
**dadurch gekennzeichnet, dass** das Kraftübertragungselement (210) integral ausgebildet ist oder mehrere Konsolensegmente (200a) aufweist.

8. Ringförmige Konsole nach Anspruch 7,
**dadurch gekennzeichnet, dass** die Konsolensegmente (200a) an mindestens einer Stirnseite in Umfangsrichtung eine Verbindungsanordnung zur Verbindung der Konsolensegmente (200a) untereinander aufweisen.

9. Ringförmige Konsole nach einem der vorherigen Ansprüche,
**dadurch gekennzeichnet, dass** die ringförmige Konsole (200) aus Stahl oder Gusseisen oder Beton besteht oder Stahl, und/oder Gusseisen und/oder Beton aufweist.

10. Externes Spannsystem (20) eines Hybridturms, vorzugsweise eines Hybridturms einer Windenergieanlage, umfassend
- eine ringförmige Konsole (200) nach mindestens einem der vorherigen Ansprüche,
- ein Spannelement (204) mit einem Anschlusskopf (204a) an einem ersten Ende zum Übertragen einer Spannkraft auf das Anschlusselement (202) und einem Anker (204b) an einem zweiten Ende zum Übertragen der Spannkraft auf ein unteres Turmsegment (103b).

11. Turmabschnitt eines Hybridturms, vorzugsweise eines Hybridturms einer Windenergieanlage, umfassend
ein oberes Turmsegment (103a) mit einem radial nach innen gerichteten Absatz, eine auf dem Absatz im inneren des oberen Turmsegments (103a) angeordnete ringförmige Konsole (200) eines externen Spannsystems (20) nach mindestens einem der Ansprüche 1 bis 9, und
ein unterhalb des oberen Turmsegments (103a) angeordnetes unteres Turmsegment (103b),
an dem ein Spannelement (204) mittels eines Ankers (204b) des externen Spannsystems (20) angeordnet und zum Verspannen des Turmabschnitts ausgebildet ist.

12. Hybridturm, vorzugsweise eines Hybridturms für eine Windenergieanlage, umfassend einen Turmabschnitt nach Anspruch 11.

13. Windenergieanlage, umfassend einen Hybridturm nach Anspruch 12.

14. Montageverfahren eines externen Spannsystems (20) für einen Hybridturm vorzugsweise für einen Hybridturm einer Windenergieanlage, umfassend
- Bereitstellen eines externen Spannsystems (20) nach Anspruch 10,
- Zusammenbau des externen Spannsystems (20),
- Anordnung einer ringförmigen Konsole (200) mit einem Lagerelement (206) des externen Spannsystems (20) auf einem Absatz im inneren eines oberen Turmsegments (103a) und/oder
- Befestigung der ringförmigen Konsole (200) mit dem Lagerelement (206) des externen Spannsystems (20) auf dem Absatz im inneren des oberen Turmsegments (103a),
- Anordnung eines Spannelements (204) mit einem Anschlusskopf (204b) des externen Spannsystems (20) an einem Anschlusselement (204a) der ringförmigen Konsole (200) und/oder
- Befestigung des Spannelements (204) mit dem Anschlusskopf (204b) des externen Spannsystems (20) an dem Anschlusselement (204a) der ringförmigen Konsole (200),
- Anordnung des Spannelements (204) mittels eines Ankers (204b) des externen Spannsystems an einem unteren Turmsegment (103b) und/oder
- Befestigung des Spannelements (204) mittels des Ankers (204b) des externen Spannsystems (20) an dem unteren Turmsegment (103b).

## Claims

1. An annular bracket (200) for the external tensioning of a tower segment (103b), in particular a tower segment (103b) of a wind power plant, with
- a connector element (202) for the connection of a tensioning element (204),
- a bearing element (206) for the transmission of a tensioning force to the tower segment (103b), and
- an annular force transmission element (210) for the transmission of the tensioning force between the connector element (202) and the bearing element (206),
- the bearing element (206) being at a greater spacing in the radial direction from a longitudinal axis (LA) of the annular bracket (200) than the connector element (202), wherein
- the spacing (A2) of the bearing element (206) from the longitudinal axis (LA) in the radial direction is less than an external radius of the tower segment (103b) and is greater than an internal radius of the tower segment (103b), **characterized in that** in the radial direction, the bearing element (206) has an extent of at most 50% of a wall thickness of the tower segment (103b).

2. The annular bracket (200) as claimed in claim 1,
**characterized in that** the spacing (A1) of the connector element (202) from the longitudinal axis (LA) in the radial direction is less than or equal to an internal radius of the tower segment (103b).

3. The annular bracket (200) as claimed in at least one of the preceding claims, **characterized in that** the annular force transmission element (210) has an upper belt (212) and/or a lower belt (214).

4. The annular bracket (200) as claimed in at least one of the preceding claims, **characterized in that** the annular force transmission element (210) has an inner web (216) and/or an outer web (218).

5. The annular bracket (200) as claimed in one of claims 3 or 4,
**characterized in that** the inner web (216) has a through opening for leading through the tensioning element (204), and/or the outer web (218) has a through opening for leading through the tensioning element (204), and/or the upper belt (212) has a through opening for leading through the tensioning element (204), and/or the lower belt (214) has a through opening for leading through the tensioning element (204).

6. The annular bracket as claimed in one of the preceding claims,
**characterized in that** the annular force transmission element (210) comprises a configured bracket thrust latch arrangement (224a) for engaging into an upper and/or lower tower segment thrust latch arrangement (224b, 224c).

7. The annular bracket as claimed in one of the preceding claims,
**characterized in that** the force transmission element (210) is of integral configuration or has a plurality of bracket segments (200a).

8. The annular bracket as claimed in claim 7,
**characterized in that** the bracket segments (200a) have a connecting arrangement for the connection of the bracket segments (200a) among one another on at least one end side in the circumferential direction.

9. The annular bracket as claimed in one of the preceding claims,
**characterized in that** the annular bracket (200) consists of steel or cast iron or concrete, or comprises steel and/or cast iron and/or concrete.

10. An external tensioning system (20) of a hybrid tower, preferably a hybrid tower of a wind power plant, comprising
- an annular bracket (200) as claimed in at least one of the preceding claims,
- a tensioning element (204) with a connector head (204a) at a first end for the transmission of a tensioning force to the connector element (202), and with a brace (204b) at a second end for the transmission of the tensioning force to a lower tower segment (103b).

11. A tower section of a hybrid tower, preferably a hybrid tower of a wind power plant, comprising
an upper tower segment (103a) with a radially inwardly directed shoulder,
an annular bracket (200) of an external tensioning system (20) as claimed in one of claims 1-9, which annular bracket (200) is arranged on the shoulder in the interior of the upper tower segment (103a), and
a lower tower segment (103b) which is arranged below the upper tower segment (103a) and
on which a tensioning element (204) is arranged by means of a brace (204b) of the external tensioning system (20) and is configured for bracing the tower section.

12. A hybrid tower, preferably a hybrid tower for a wind power plant, comprising a tower section as claimed in claim 11.

13. A wind power plant, comprising a hybrid tower as claimed in claim 12.

14. An assembly method of an external tensioning system (20) for a hybrid tower, preferably for a hybrid tower of a wind power plant, comprising
- providing of an external tensioning system (20) as claimed in claim 10,
- assembling of the external tensioning system (20),
- arranging of an annular bracket (200) with a bearing element (206) of the external tensioning system (20) on a shoulder in the interior of an upper tower segment (103a), and/or
fastening of the annular bracket (200) with the bearing element (206) of the external tensioning system (20) on the shoulder in the interior of the upper tower segment (103a),
- arranging of a tensioning element (204) with a connector head (204b) of the external tensioning system (20) on a connector element (204a) of the annular bracket (200), and/or
fastening of the tensioning element (204) with the connector head (204b) of the external tensioning system (20) to the connector element (204a) of the annular bracket (200),
- arranging of the tensioning element (204) by means of a brace (204b) of the external tensioning system on a lower tower segment (103b), and/or
fastening of the tensioning element (204) by means of the brace (204b) of the external tensioning system (20) on the lower tower segment (103b).

## Revendications

1. Console (200) annulaire pour le serrage externe d'un segment de tour (103b), en particulier d'un segment de tour (103b) d'une éolienne, avec
- un élément de raccordement (202) pour le raccordement d'un élément de serrage (204),
- un élément de palier (206) pour la transmission d'une force de serrage au segment de tour (103b) et
- un élément de transmission de force (210) annulaire pour la transmission de la force de serrage entre l'élément de raccordement (202) et l'élément de palier (206), dans laquelle
- l'élément de palier (206) présente, en direction radiale, une distance plus grande, par rapport à un axe longitudinal (LA) de la console (200) annulaire, que l'élément de raccordement (202), dans laquelle
- dans la direction radiale, la distance (A2) de l'élément de palier (206) par rapport à l'axe longitudinal (LA) est plus petite qu'un rayon extérieur du segment de tour (103b) et plus grande qu'un rayon intérieur du segment de tour (103b), **caractérisée en ce que** l'élément de palier (206) présente, dans la direction radiale, une étendue de 50 % maximum d'une épaisseur de paroi du segment de tour (103b).

2. Console (200) annulaire selon la revendication 1,
**caractérisée en ce que**, dans la direction radiale, la distance (A1) de l'élément de raccordement (202) par rapport à l'axe longitudinal (LA) est inférieure ou égale à un rayon intérieur du segment de tour (103b).

3. Console (200) annulaire selon au moins l'une quelconque des revendications précédentes,
**caractérisée en ce que** l'élément de transmission de force (210) annulaire présente une sangle supérieure (212) et/ou une sangle inférieure (214).

4. Console (200) annulaire selon au moins l'une quelconque des revendications précédentes,
**caractérisée en ce que** l'élément de transmission de force (210) annulaire présente une nervure intérieure (216) et/ou une nervure extérieure (218).

5. Console (200) annulaire selon l'une quelconque des revendications 3 ou 4,
**caractérisée en ce que** la nervure intérieure (216) présente une ouverture débouchante pour le passage de l'élément de serrage (204) et/ou la nervure extérieure (218) présente une ouverture débouchante pour le passage de l'élément de serrage (204) et/ou la sangle supérieure (212) présente une ouverture débouchante pour le passage de l'élément de serrage (204) et/ou la sangle inférieure (214) présente une ouverture débouchante pour le passage de l'élément de serrage (204).

6. Console annulaire selon l'une quelconque des revendications précédentes,
**caractérisée en ce que** l'élément de transmission de force (210) annulaire comprend un agencement de blocage de poussée de console (224a) réalisé pour l'engagement dans un agencement de blocage de poussée de segment de tour (224b, 224c) supérieur et/ou inférieur.

7. Console annulaire selon l'une quelconque des revendications précédentes,
**caractérisée en ce que** l'élément de transmission de force (210) est réalisé d'un seul tenant ou présente plusieurs segments de console (200a).

8. Console annulaire selon la revendication 7,
**caractérisée en ce que** les segments de console (200a) présentent entre eux, au niveau d'au moins un côté frontal en direction périphérique, un agencement de liaison pour la liaison des segments de console (200a).

9. Console annulaire selon l'une quelconque des revendications précédentes,
**caractérisée en ce que** la console (200) annulaire se compose d'acier ou de fer forgé ou de béton, et/ou présente de l'acier et/ou du fer forgé et/ou du béton.

10. Système de serrage externe (20) d'une tour hybride, de préférence d'une tour hybride d'une éolienne comprenant
- une console (200) annulaire selon au moins l'une quelconque des revendications précédentes,
- un élément de serrage (204) avec une tête de raccordement (204a) à une première extrémité pour la transmission d'une force de serrage à l'élément de raccordement (202) et un ancrage (204b) à une seconde extrémité pour la transmission de force de serrage à un segment de tour inférieur (103b).

11. Section de tour d'une tour hybride, de préférence d'une tour hybride d'une éolienne comprenant
un segment de tour supérieur (103a) avec un talon dirigé radialement vers l'intérieur, une console (200) annulaire agencée sur le talon à l'intérieur du segment de tour (103a) supérieur d'un système de serrage (20) externe selon au moins l'une quelconque des revendications 1 à 9 et
un segment de tour (103b) inférieur agencé en dessous du segment de tour (103a) supérieur,
au niveau duquel un élément de serrage (204) est agencé au moyen d'un ancrage (204b) du système de serrage (20) externe et est réalisé pour le haubanage de la section de tour.

12. Tour hybride, de préférence tour hybride pour une éolienne comprenant une section de tour selon la revendication 11.

13. Eolienne comprenant une tour hybride selon la revendication 12.

14. Procédé de montage d'un système de serrage (20) externe pour une tour hybride, de préférence pour une tour hybride d'une éolienne, comprenant
- la fourniture d'un système de serrage (20) externe selon la revendication 10,
- l'assemblage du système de serrage (20) externe,
- l'agencement d'une console (200) annulaire avec un élément de palier (206) du système de serrage (20) externe sur un talon à l'intérieur d'un segment de tour (103a) supérieur et/ou
- la fixation de la console (200) annulaire avec l'élément de palier (206) du système de serrage (20) externe sur le talon à l'intérieur du segment de tour (103a) supérieur,
- l'agencement d'un élément de serrage (204) avec une tête de raccordement (204b) du système de serrage (20) externe au niveau d'un élément de raccordement (204a) de la console (200) annulaire et/ou
- la fixation de l'élément de serrage (204) avec la tête de raccordement (204b) du système de serrage (20) externe à l'élément de raccordement (204a) de la console (200) annulaire,
- l'agencement de l'élément de serrage (204) au moyen d'un ancrage (204b) du système de serrage externe au niveau d'un segment de tour (103b) inférieur et/ou
- la fixation de l'élément de serrage (204) au moyen de l'ancrage (204b) du système de serrage (20) externe au segment de tour (103b) inférieur.
